Europäisches Patentamt

European Patent Office

Office européen des brevets

(11) Publication number: **0 572 024 A2**

# EUROPEAN PATENT APPLICATION

(21) Application number: **93108619.3**

(22) Date of filing: **27.05.93**

(51) Int. Cl.5: **G06F 3/147**, G09G 1/16

(30) Priority: **27.05.92 JP 135189/92**

(43) Date of publication of application:
**01.12.93 Bulletin 93/48**

(84) Designated Contracting States:
**DE FR GB**

(71) Applicant: **Kabushiki Kaisha Toshiba**
**72, Horikawa-cho**
**Saiwai-ku**
**Kawasaki-shi(JP)**

(72) Inventor: **Zenda, Hiroki, c/o Intellectual**
**Property Div.**
**K.K. Toshiba,**
**1-1 Shibaura 1-chome,**
**Minato-ku**
**Tokyo 105(JP)**
Inventor: **Tomiyasu, Yuichi, c/o Intellectual**
**Property Div.**
**K.K. Toshiba,**
**1-1 Shibaura 1-chome,**
**Minato-ku**
**Tokyo 105(JP)**

(74) Representative: **Henkel, Feiler, Hänzel &**
**Partner**
**Möhlstrasse 37**
**D-81675 München (DE)**

(54) **Multimedia display control system for storing image data in frame buffer.**

(57) An MPEG board is connected to a computer main body. The MPEG board has a decompressor (31) for decompressing compressed YUV image data, and a YUV/RGB converter (35) for converting the decompressed YUV image data into RGB image data. A display controller chip arranged in the computer main body includes a frame buffer (25) for converting data of a CRT display timing into data of a monochrome LCD display timing. RGB motion picture data output from the MPEG board is stored in the frame buffer (25). The frame buffer (25) is used to convert the data of the CRT display timing into the data of the monochrome LCD display timing, and is also used to store the motion picture data, thereby displaying the motion picture data and VGA display data by using a common display circuit.

FIG. 2

The present invention relates to a display control system and, more particularly, to a multimedia display control system for storing image data in frame buffers.

A VGA (Video Graphics Arrays) has been used as a graphics controller (video subsystem) for a portable computer. The VGA includes a display control mechanism and has a display function of displaying 250 colors at a resolution of 640 × 480 pixels. Graphical user interfaces such as the Windows and the OS/2 presentation manager (PM) have also been developed. There are user's demands for an efficient operation of such a GUI.

In order to meet such demands, a portable computer has been developed, which is designed to allow connection of a display card, e.g., a display card having a higher resolution than a graphic subsystem (a display controller, a RAMDAC, and the like) incorporated in the computer main body, to an expansion slot of the computer main body through a standard connector called a feature connector independently of the graphic subsystem. For example, a frame or picture controlled by a display controller mounted, as a standard unit, in a portable computer main body is displayed on a color CRT connected to the standard CRT connector of the computer main body, whereas display data from another display controller and display data from the display controller incorporated in the computer main body are switched and displayed on a CRT connected to a CRT connector on a display board inserted in the expansion slot of the portable computer.

In the prior art, however, a display unit is limited to a CRT when display data from two different types of display controllers are switched and displayed.

In order to solve this problem, a technique of switching display data from two different types of display controllers to display the data on a flat panel display has been developed. For example, such a technique is disclosed in US serial No. 07/953,152 (filing date: September 29, 1992, Inventor: Hiroki ZENDA). According to this application, a portable computer having a TFT color LCD and a first graphic subsystem includes an expansion slot in which a connector for the connection of a second graphic subsystem is mounted. The portable computer further includes a switching circuit for switching display data from the first and second graphic subsystems and supplying the data to a color LCD controller. When the second graphic subsystem is not connected to the computer, the switching circuit supplies display data and a control signal from the first graphic subsystem to the color LCD controller. As a result, the color LCD controller displays the display data from the first graphic subsystem on the color LCD. When the second graphic subsystem is connected to the computer through the connector, a control signal from the first graphic subsystem is blocked with a predetermined lag. As a result, display data and control data from the second graphic subsystem are supplied to the color LCD controller. The color LCD controller then displays the display data from the second graphic subsystem on the color LCD. With this operation, display data from a plurality of types of display controllers can be switched and displayed on a single flat panel display.

With the recent advances in portable computers, a computer called a multimedia personal computer has been developed. This computer can display image data such as motion and still pictures on a CRT as well as text data and graphics data. Image data is displayed by using a YUV signal conventionally used in a TV, a VTR, and the like. For this reason, text data and graphics data are displayed by using an RGB display circuit incorporated in the computer main body, while image data is displayed by connecting an option board to the computer main body. As such an option board, for example, the CL-450 (Registered Trademark) Development Board available from C-Cube Microsystems in the US can be used. This board is designed to decompress an MPEG (Motion Picture Coding Experts Group) compressed video signal by using an MPEG video algorithm, convert a YUV signal into an RGB signal, and output the RGB signal. Note that MPEG is an organization for promoting the standardization of coding schemes for storing color motion picture data, which organization is a sub-organization of JTCI (Joint Technical Committee for International Standardization Associated with Information Processing) administered by both ISO (International Organization for Standardization) and IEC (International Electrotechnical Commission). MPEG sometimes indicates a coding scheme for storing color motion picture data. There are two types of MPEG, i.e., MPEG-1 designed to be applied to a CD-ROM; and MPEG-2 designed for higher image quality. In these schemes, the transfer rates are respectively set to be 1.5 Mbits/sec or less and 5 M to 10 Mbits/sec.

A DVI (Digital Video Interactive) board available from Intel Corporation in the US is also known. On this DVI board, the following components are mounted: the 82750PM chip for compressing/decompressing image data, a VRAM for storing image data, and the 82750DB chip for controlling display of image data.

If, however, such an option board is connected to a computer main body, the circuit arrangement becomes redundant because of the presence of two subsystems, i.e., an RGB display subsystem incorporated in the computer main body and a YUV display subsystem on the option board.

With the advances in laptop computers, some portable computers employ flat panels such as TFT color LCDs and the like. It is also required for such a portable computer to display text data, graphics data, and

EP 0 572 024 A2

image data such as motion picture data, still picture data, and the like and display them together by using a flat panel display.

It is an object of the present invention to provide a display system in a portable computer using a flat panel display such as a TFT color LCD as a display device, which system can display both graphics data and image data through a common display circuit by causing a display controller mounted, as a standard unit, in the main body, to substitute for a given display function of another display controller.

According to the first aspect of the present invention, there is provided a display control system in a portable computer having a flat panel display unit, comprising: means for receiving image data, externally supplied to the portable computer, in the form of R (red), G (green), and B (blue) data; frame buffer memory means used to convert a display timing of a CRT display unit into a display timing of the flat panel display, and also used to store the image data; video memory means for storing text data and graphics data; palette means for performing color conversion of display data output from the video memory means; selecting means for selectively outputting image data output from the frame buffer memory means and display data output from the palette means; gray scale control means for controlling a gray scale of display data output from the selecting means and outputting the display data to the flat panel display unit; and D/A converter means for converting display data output from the selecting means into R, G, and B analog signals.

According to the second aspect of the present invention, there is provided a multimedia display control system, comprising: frame buffer means for storing decompressed image data; means, arranged at an input stage of the frame buffer means, for receiving the decompressed image data in real time and temporarily holding the data; means for holding control information for displaying the image data; and means for controlling the means for temporarily holding the decompressed image data on the basis of control information from the means for holding the display control information for the image data, and writing the image data in the frame buffer means in real time.

According to the third aspect of the present invention, there is provided a display controller for reading out still picture data/motion picture data stored in a frame buffer, enlarging/reducing the image data to an arbitrary size, and displaying the image data at an arbitrary position on a screen to be displayed, comprising: means for holding a value indicating a size of data stored in the frame buffer, horizontal and vertical scale values indicating reduction rates, and a value indicating a window area to be displayed; means for performing reduction processing by omitting specific dots of the still picture data/motion picture data; and means for checking whether the reduction rate is set such that data to be displayed is smaller in amount than data to be omitted, and changing an omission ratio to obtain data to be displayed.

According to the fourth aspect of the present invention, there is provided a motion picture data display control system, comprising: means for converting decompressed motion picture data, externally supplied and constituted by n-bit R, G, and B data, into motion picture data constituted by m-bit R, G, and B data (n > m); means for mixing motion picture data with display data from a high-resolution graphic subsystem; means for converting n-bit display data, supplied from the high-resolution graphic subsystem, or an n-bit output, supplied from the mixing means, into m-bit R, G, and B color data; means for converting an output, supplied from the means for performing conversion to the m-bit R, G, and B motion picture data, into n-bit color discrimination data, and converting an output, supplied from the means for performing conversion to the m-bit R, G, and B color data, into n-bit color discrimination data; means for holding the n-bit color discrimination data obtained by converting the m-bit R, G, and B color data; and means for comparing the n-bit color discrimination data obtained by converting the m-bit R, G, and B color data with the color discrimination data held by the holding means, and writing color discrimination data having a value nearest to that of the color discrimination data obtained by conversion in a frame buffer.

According to the present invention, data based on two different display systems, e.g., YUV data based on the MPEG standard and RGB data based on the VGA standard, are displayed/controlled by a common display circuit, thus simplifying the display system. The display system also includes a frame buffer for converting data based on the CRT display timing into data based on the monochrome LCD display timing. When a TFT color LCD is used, since no refresh operation is required, the frame buffer is not used. For this reason, image data decompressed by a decompressor is stored in the frame buffer so that a single memory (frame buffer) can serve both as a monochrome LCD frame memory and a video memory for storing image data. Therefore, the display system can be further simplified. In addition, since the memory used by the decompressor to perform decompression is constituted by a DRAM, a low-cost display system can be obtained.

According to the present invention, since the frame buffer is commonly used by the TFT color LCD and the monochrome LCD, the circuit can be simplified. In addition, since the DB chip arranged on the DVI board in the conventional system is omitted, and only decompression is performed by the DVI board, the display circuit can be commonly used by different display schemes, and the circuit arrangement can be

3

simplified. In the conventional system, a VRAM is mounted on the DVI board. In contrast to this, in the present invention, an inexpensive DRAM is used instead of an expensive VRAM, and hence a reduction in the cost of the overall system can be achieved.

By using write and read FIFOs to perform read and write operations of motion picture data, smooth motion picture display can be realized while the moving speed of motion picture data is maintained. In addition, enlargement/reduction can be performed by using a control circuit having a read FIFO, and motion picture data can be mixed with multifunctional VGA video outputs.

By selecting dots in accordance with a reduction rate, display dots can be displayed at equal intervals to realize smooth reduction display.

Furthermore, according to the present invention, the system includes a color discriminating register for discriminating 256 (8 bits) colors from the respective values of a color lookup table consisting of 18 bits (R, G, and B) × 256 color data by using a certain formula, and storing the resultant values, a conversion table for converting motion picture data of 24 dots/pixel, represented by 8-bit R, G, and B data, into data of 18 bits/pixel, represented by 6-bit R, G, and B data, and a comparator for discriminating colors from the 18-bit data by using the above-mentioned formula and comparing them with the values in the color discriminating register. Upon comparison, addresses, of the color discriminating register, which designate values nearest to the discriminated colors are provided, thereby obtaining 8-bit data. As a result, the motion picture data is written or read out, as 8-bit data, in or from the motion picture data storing frame buffer. The read data is synthesized with display data to obtain selection addresses of the color lookup table. In order to access motion picture data, each pixel of which is represented by a large number of bits, a large-capacity frame buffer must be used. In addition, a complicated memory accessing method is required. Since the system of the present invention conforms to the VGA display color count and the VGA memory access method, a small frame buffer can be used. Therefore, a low-cost system can be realized. In addition, with the simple memory access method, the system can easily adapt to a standard VGA display controller.

This invention can be more fully understood from the following detailed description when taken in conjunction with the accompanying drawings, in which:

Fig. 1 is a block diagram showing the overall arrangement of a multimedia display control system of the present invention;

Fig. 2 is a block diagram showing the first embodiment of the multimedia display control system in Fig. 1;

Fig. 3 is a diagram for explaining a state wherein 4-bit or 8-bit VGA graphic data and 24-bit MPEG motion picture data are displayed together in the embodiment shown in Fig. 2;

Fig. 4 is a diagram for explaining a state wherein 24-bit VGA graphic data and 24-bit MPEG motion picture data are displayed together in the embodiment shown in Fig. 2;

Fig. 5 is a block diagram showing the detailed arrangement of the circuit in Fig. 2, which is designed to control write/read operations of motion picture data with respect to a frame buffer;

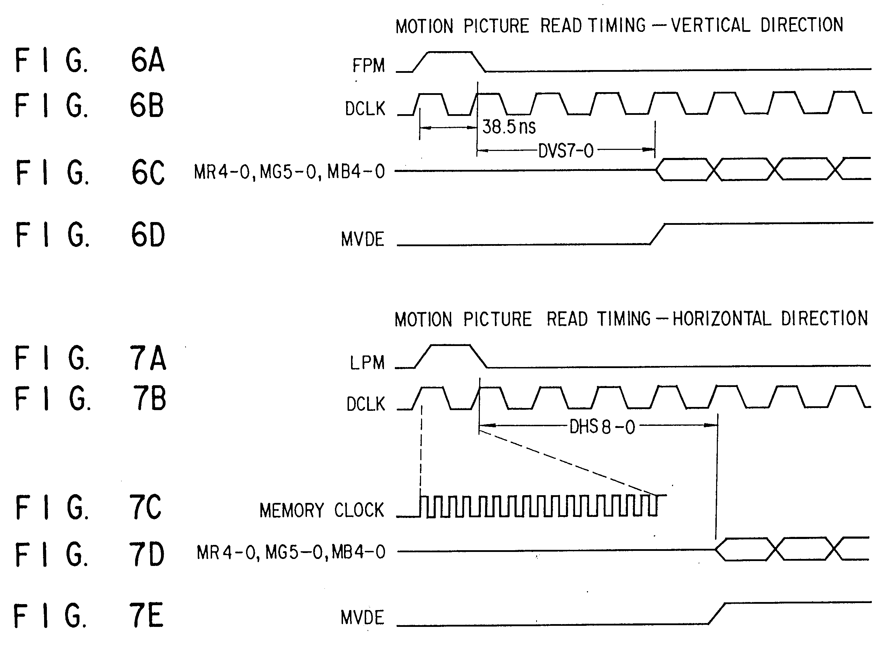

Figs. 6A through 6D are timing charts showing a motion picture data read timing in the vertical direction;

Figs. 7A through 7E are timing charts showing a motion picture data read timing in the horizontal direction;

Fig. 8 is a view showing the bit configuration of motion picture data;

Fig. 9 is a view showing the memory configuration of the frame buffer;

Fig. 10 is a timing chart showing motion picture data read/write timings;

Fig. 11 is a diagram for explaining a motion picture data read operation in reduction processing;

Fig. 12 is a diagram for explaining insertion of an intermediate gray scale in enlargement processing;

Fig. 13 is a diagram for explaining a position at which motion picture data and display data are mixed;

Fig. 14 is a diagram for explaining mixing of motion picture data and display data;

Fig. 15 is a block diagram showing a control circuit for receiving motion picture data from a video decoder and writing the motion picture data in a motion picture data frame buffer;

Fig. 16 is a block diagram showing a control circuit for reading out data from the motion picture data frame buffer and performing enlargement/reduction processing of the data;

Figs. 17A through 17D are timing charts showing the operations of the control circuits in Figs. 15 and 16, in which Fig. 17A shows the waveform of a signal used for a write FIFO, Fig. 17B shows the waveform of a signal used for a memory write operation, Fig. 17C shows the waveform of a signal used for a memory read operation, and Fig. 17D is a timing chart shows the waveform of a signal used for a read FIFO;

Figs. 18A and 18B are timing charts showing a dot thinning example when the reduction rate is 3/4 (horizontal dot count: 64, display dot count: 48);

Fig. 19 is a block diagram showing a circuit for reduction processing in the horizontal direction;

Fig. 20 is a block diagram showing a circuit for performing a memory access operation of motion picture data;

Fig. 21 is a block diagram showing the detailed arrangement of a display area controller 49 in Fig. 15;

Figs. 22A through 22H are timing charts showing the waveforms of the signals shown in Fig. 21;

Fig. 23 is a block diagram showing the detailed arrangement of an enlargement/reduction processor in Fig. 16;

Fig. 24 is a block diagram showing a circuit for controlling enlargement processing in the horizontal direction;

Figs. 25A through 25E are timing charts showing the waveforms of the signals appearing in the circuits shown in Figs. 23 and 24;

Fig. 26 is a block diagram showing the detailed arrangement of part of a mixing control circuit in Fig. 20, which circuit is designed to generate a pixel data selection condition;

Fig. 27 is a block diagram showing the detailed arrangement of part of the mixing control circuit in Fig. 20, which circuit is designed to perform mixing of motion picture data;

Fig. 28 is a block diagram showing another embodiment of the present invention, specifically an arrangement in which a DVI board is connected to the computer main body;

Fig. 29 is a diagram for explaining a state wherein 4- or 8-bit graphics data and 24-bit DVI motion picture data are displayed together in the embodiment shown in Fig. 28;

Fig. 30 is a diagram for explaining a state wherein 24-bit graphics data and 24-bit DVI motion picture data are displayed together in the embodiment shown in Fig. 28;

Fig. 31 is a block diagram showing a modification of the embodiment shown in Fig. 2, specifically an arrangement in which the decompressor, the DRAM, and the YUV/RGB converter on the MPEG board shown in Fig. 2 are incorporated, as standard units, in the computer main body;

Fig. 32 is a block diagram showing a modification of the embodiment in Fig. 28, specifically an arrangement in which the decompressor and the DRAM on the DVI board are incorporated, as standard units, in the computer main body;

Fig. 33 is a block diagram showing an arrangement in which an MPEG data frame buffer and a monochrome LCD frame buffer are commonly controlled by a memory control circuit in a VGA chip; and

Fig. 34 is a block diagram showing an arrangement in which a DVI data frame buffer and a monochrome LCD frame buffer are commonly controlled by a memory control circuit in a VGA chip.

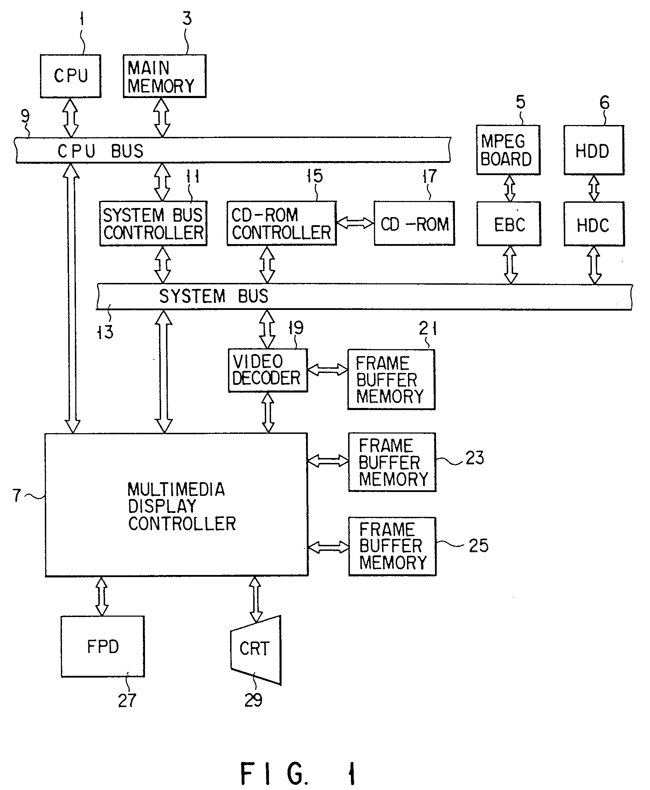

Fig. 1 is a block diagram showing the overall arrangement of a multimedia display control system of the present invention. A central processing unit (CPU) 1, a main memory 3, a video capture board 5, and a multimedia display controller 7 are connected to a CPU bus 9. A system controller 11 is connected to the CPU bus 9 and a system bus 13. The system bus 13 is further connected to a CD-ROM controller 15. A CD-ROM 17 is connected to the CD-ROM controller 15. The system bus 13, a frame buffer memory 21, and the multimedia display controller 7 are connected to a video decoder 19. Frame buffer memories 23 and 25, a flat panel display (FPD) 27, and a CRT 29 are connected to the multimedia display controller 7. The frame buffer memory 21 is used to decompress compressed image data. The frame buffer memory 23 is used to store, e.g., VGA display data. The frame buffer memory 25 is used to store motion picture data. The video capture board 5 compresses/decompresses compressed image data stored in, e.g., the CD-ROM 17, and outputs the resultant data in the YUV form or the RGB form. For example, the video capture board 5 is a board based on the MPEG (Motion Picture Experts Group) standards. As such a video capture board (to be referred to as an MPEG board hereinafter), "CL450 (trademark) Development Board" available from C-CUBE MICROSYSTEMS in the US can be used. This board is described in detail in "CL450 MPEG VIDEO DECODER USER'S MANUAL" (released in 1992) and "C-CUBE CL450 DEVELOPMENT KIT USER'S GUIDE" (released in 1992). The video decoder 19 converts decompressed motion picture data, output from the MPEG board 5, into, e.g., 8-bit R, G, and B data, and supplies them to the multimedia display controller 7. The multimedia display controller 7 performs display timing control and mixing processing for displaying still picture and motion picture data as well as general text data and graphics data or for displaying them together. The multimedia display controller 7 also performs display area control, enlargement/reduction processing, write and read control of motion picture data with respect to the frame buffer memory 25, memory address control, and the like. Note that the frame buffer memory 25 can store still picture data such as data based on JPEG (Joint Photographic Experts Group) as well as motion picture data such as MPEG video data and DVI video data (to be described later). In the embodiments of the present invention, image data includes motion picture data and still picture data. Note that JPEG is a joint organization of ISO (International Organization for Standardization) and CCITT (Comite Consultatif Internationale Telegraphique et Telephonique) and serves to promote the standardization of color still picture coding. JPEG sometimes means a color still picture coding scheme.

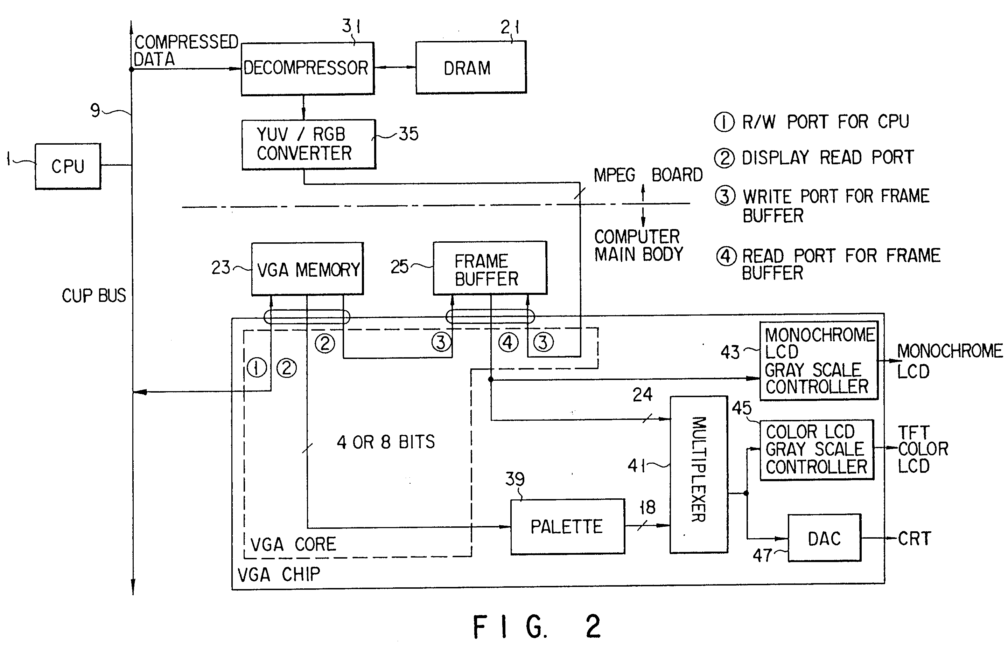

Fig. 2 is a diagram for explaining a procedure for storing motion picture data, supplied from the MPEG board, in a frame buffer arranged in the computer main body in the multimedia display control system in Fig. 1. The same reference numerals in Fig. 2 denote the same parts as in Fig. 1. In this embodiment, a frame buffer 25 for performing conversion from the CRT display timing to the monochrome LCD timing is used to store motion picture data so as to eliminate the redundancy of having both a CRT/LCD display timing converting buffer and a motion picture storing frame buffer, thereby simplifying the circuit.

Referring to Fig. 2, a graphic subsystem incorporated in the computer main body is a display subsystem for displaying graphic software, and is constituted by, e.g., a VGA (Video Graphics Arrays). A decompressor 31, a single-port dynamic random access memory (DRAM) 21, and a YUV/RGB converter 35 are mounted on an MPEG board 5. The decompressor 31 has a function of decompressing compressed image data supplied through a CPU bus 9. The decompressor 31 writes compressed image (motion and still pictures) data, supplied through the CPU bus 9, in the DRAM 21 while decompressing it. For example, compressed image data is stored in a hard disk (not shown) or a CD-ROM 17. The compressed image data is decompressed and is output, as 32-bit data, to the frame buffer 25 on the portable computer main body side through a connector (not shown) arranged on the computer main body side and the write port of the frame buffer 25. The frame buffer 25 is described in detail in USSN 07/906,834.

The DRAM 21 stores microcodes and calculation results of compressed data.

The output of the decompressor 31 is connected to the YUV/RGB converter 35. "YUV" is a display scheme using luminance and color coordinate data. This scheme is used for a television set, a video tape recorder, and the like. The YUV/RGB converter 35 performs conversion from the YUV scheme to the RGB scheme by using the following equations. Note that "Y" stands for luminance and "U" and "V" stand for chromaticity.

$$G = Y - 0.509228V - 0.194888U \qquad (1a)$$

$$R = Y + V \qquad (1b)$$

$$B = Y + U \qquad (1c)$$

where $0.0 < G, R, B < 1.0$, $0.0 < Y < 1.0$, $-0.701 < V < +0.701$, and $-0.886 < U < +0.886$. Conversion from the YUV scheme to the RGB scheme is performed in units of pixels. The image data in the RGB form, output from the YUV/RGB converter 35, is written in the frame buffer 25.

The frame buffer 25 is used in the following two ways. When a monochrome LCD (Liquid Crystal Display) is used as a display unit, display data written in the frame buffer 25 at the CRT timing is read out at the monochrome LCD timing, thereby displaying the data on the monochrome LCD at the CRT timing. When a TFT color LCD is used as a display unit, since conversion from the CRT timing to the LCD timing need not be performed by using the frame buffer 25, the frame buffer 25 is used as a memory for storing decompressed image data in the RGB form, output from the YUV/RGB converter 35.

A VGA memory 23 is a VRAM for storing display data in a VGA graphic subsystem. Display data is written in the VGA memory 23 by a CPU 1 through the CPU bus 9. The display data stored in the VGA memory 23 is read out through a display read port to be output to a palette 39. The palette 39 performs color conversion of the display data, and outputs the resultant data to a multiplexer 41. When a CRT is used as a display unit, the multiplexer 41 outputs the display data from the palette 39 to a DAC 47. When a color LCD is used as a display unit, the multiplexer 41 outputs RGB data from the frame buffer 25 to a color LCD gray scale controller 45. In this embodiment, the DAC 47 has a 24-bit input. 6-bit dummy data is added to 18-bit data output from the palette 39. The resultant 24-bit data is input to the DAC 47. Note that the DAC 47 may have a 18-bit input. In this case, 6-bit data may be subtracted from 24-bit image data output from the frame buffer 25 to obtain 18-bit data, or the 24-bit image data may be converted into 18-bit data by using a color lookup table. The 18-bit data is then input to the DAC 47.

Referring to Fig. 2, a portion enclosed with the broken line, which is described as "VGA core", corresponds to a known VGA chip (e.g., the "PVGA1A" chip disclosed in the PVGA1A specifications published by Paradise Systems, Inc. of the US on December 9, 1988). In the present invention, the palette 39, the multiplexer 41, a monochrome LCD gray scale controller 43, the color LCD gray scale controller 45, and the DAC 47 are added to the VGA core to constitute a VGA chip as a 1-chip LSI.

The flows of display data in using a monochrome LCD, a color LCD, and a CRT as display units, respectively, will be described below.

When the monochrome LCD is to be used, display data stored in the VGA memory 23 is read out through the display read port and is written in the frame buffer 25 through its write port. The display data written in the frame buffer 25 is read out at the display timing of the monochrome LCD to be output to the monochrome LCD through the monochrome LCD gray scale controller 43.

When the color LCD is to be used, display data read out from the VGA memory 23 is subjected to color conversion in the palette 39, and the resultant data is output from the multiplexer 41 to the color LCD through the color LCD gray scale controller 45.

When the CRT is to be used, display data read out from the VGA memory 23 is subjected to color conversion through the palette 39, and the resultant data is output from the multiplexer 41 to the DAC 47. The data further undergoes color conversion in the DAC 47 and is output to the CRT.

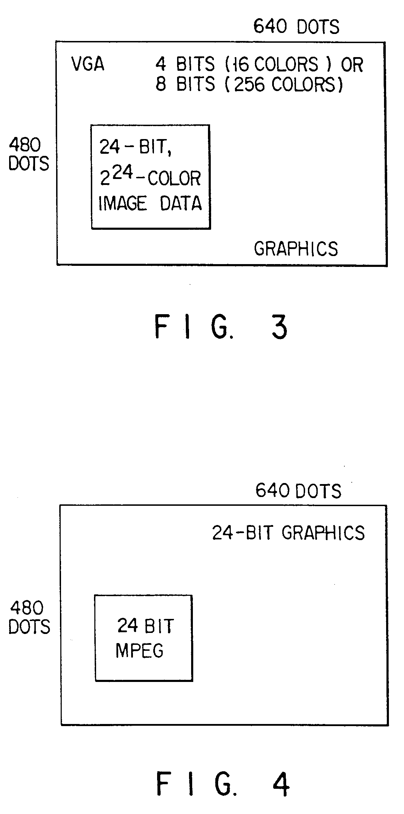

As shown in Figs. 3 and 4, both VGA and MPEG video data as display data can be displayed together by forming a window for MPEG video data on a VGA display screen. There are two methods of displaying two types of data together. In the first method, as shown in Fig. 4, both VGA and MPEG data are displayed in a 24-bit configuration. In this method, VGA display data and MPEG display data are written in the frame buffer 25 and are displayed on the color LCD or the CRT through the multiplexer 41. However, graphics data can be satisfactorily displayed in 16 or 256 colors. Therefore, 24 bits per pixel are too many.

In the second method, as shown in Fig. 3, VGA graphics data is displayed using 4 bits (16 colors) or 8 bits (256 colors) per pixel, and only image data is displayed in a 24-bit configuration. With this bit configuration, since graphics data can be accessed in units of only 4 or 8 bits, high-speed processing can be realized. In this method, VGA graphics data is output to the multiplexer 41 through the VGA memory 23 and the palette 39, and image data in the frame buffer 25 is output to the multiplexer 41 so that both the data are switched/controlled by the multiplexer 41 to be output to the color LCD or the CRT.

In the above-described embodiment, the decompressor and the DRAM are arranged on the MPEG board, and the MPEG board is connected to the computer main body through the connector. However, the decompressor and the DRAM may be incorporated, as standard units, in the computer main body.

In addition, the above-described embodiment uses the TFT color LCD. However, the system of the present invention may be designed to use an STN color LCD.

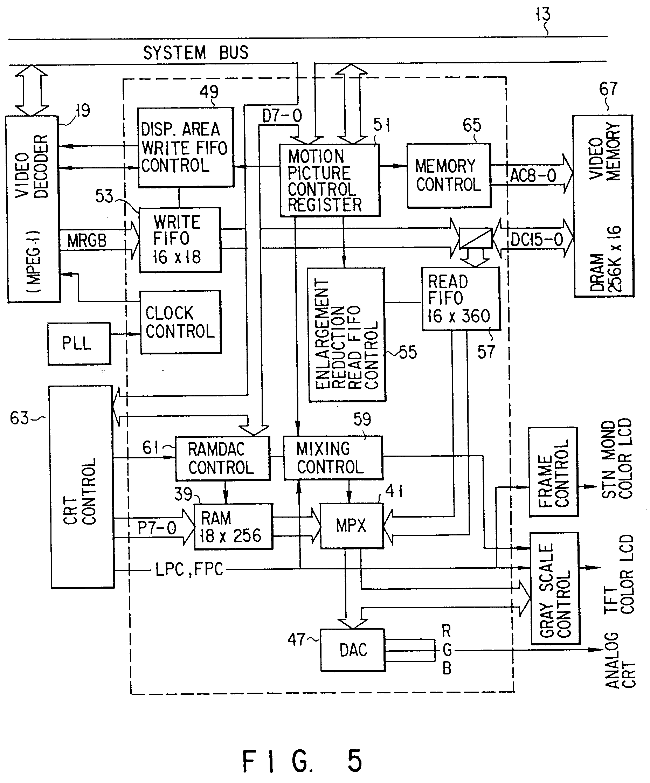

Fig. 5 is a block diagram showing the detailed arrangement of a circuit for performing control to write/read the motion picture data shown in Fig. 2 in/from the frame buffer 25. The same reference numerals in Fig. 5 denote the same parts as in Fig. 2.

A display area write FIFO control 49 controls a display area and a write FIFO 53 on the basis of control information from a motion picture control register 51. An enlargement/reduction read FIFO control 55 controls enlargement/reduction of motion picture data and a read FIFO 57 on the basis of control information from the motion picture control register 51. A mixing control 59 controls the switching timing of a multiplexer 63 to mix and display motion picture data, read out from the read FIFO 57, and display data, read out from a RAM 39, together on the basis of control information from the motion picture control register 51. A RAMDAC control 61 converts 8-bit data (P7-0) output from the multiplexer 63 into 6-bit R, G, and B data by using the RAM 39. The DAC 47 converts the motion picture data or the display data output from the multiplexer 41 into R, G, and B analog signals.

In this embodiment, decompressed motion picture data output from the video decoder 19 or the system bus 13 can be vertically and horizontally enlarged or reduced and displayed at an arbitrary position on the screen. For example, motion picture image is image data displayed using 360 $\times$ 240 dots at a rate of 60 frames/s. This data has a data width of 16 bits and can be displayed in 65,536 colors. Reduction/enlargement is performed in the vertical and horizontal directions independently in units of 1/64. Motion picture image can be displayed in the maximum range of 1,024 $\times$ 512 dots.

The output start position of motion picture data from the video decoder is defined by a dot clock count (DCLK) corresponding to a start X direction offset from the trailing edge of a motion picture data horizontal sync signal (LPM) and a dot clock count corresponding to a start Y direction offset from the trailing edge of a vertical sync signal (FPM), and the motion picture data is output during a period in which a signal (MVDE) indicating a motion picture data mixing period is enabled. The start X and Y direction offsets are preset in the video decoder.

The motion picture data is written in the frame buffer memory 25. Data is read from the frame buffer memory 25 in accordance with a display area (defined by the motion picture control register 51) and is synthesized with display data from a video memory. The resultant data is input to a video DAC. There are two methods of writing data in the frame buffer memory 25. In one method, the CPU directly writes data in the frame buffer memory 25. In the other method, data output from the video decoder is written in the frame buffer memory 25.

Reading of motion picture data from the video decoder is performed in synchronism with a dot clock. As a dot clock, a clock obtained by 1/8-frequency-dividing (60 frames/s) or 1/16-frequency-dividing (30 frames/s) a memory clock is used. In memory access to the frame buffer 25, 1 pixel is accessed by accessing 16 bits. The display size of motion picture data is determined by a start X direction/start Y direction registers and size X/size Y registers, and the data is written in the frame buffer memory 25. During a period in which the signal (MVDE) indicating the motion picture data mixing period is disabled, no data is written in the frame buffer memory 25. If MVDF is in an output mode, it indicates a display area. By stopping a write operation with respect to the frame buffer memory 25, a motion picture display can be made still without reading motion picture data from the video decoder.

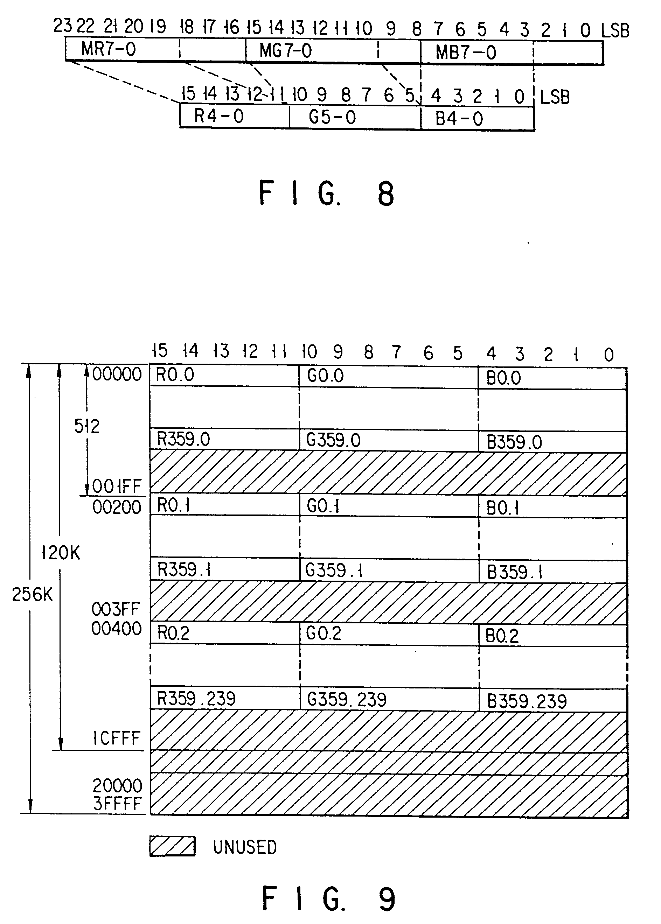

Motion picture data output from the video decoder is 24-bit data (8-bit R, G, and B data), and data written in the frame buffer memory 25 consists of 16 bits. In this case, the upper 5 bits of Red data, the upper 5 bits of Blue data, and the upper 6 bits of Green data are used. Fig. 8 shows the configuration of motion picture.

As the frame buffer memory 25 for storing motion picture data, 1,350 Kbits (360 × 240 × 16 bits) of a video memory (256K × 16) 67 shown in Fig. 5 are used. Fig. 9 shows the memory configuration of the frame buffer memory 25.

In order to display motion picture data in real time, motion picture data from the video decoder or the system bus must be directly written in the frame buffer memory 25, and motion picture data of 360 × 240 dots × 16 bits/pixel from the frame buffer memory 25 must be read within a time during which a picture (VGA) is displayed. Reading of motion picture data from the frame buffer memory 25 is performed in units of lines to perform reduction processing. A period of time obtained by subtracting a motion picture read time (360 dots × 16 bits) and a refresh time from a 1-line display time (horizontal period) is assigned to a write operation of motion picture data.

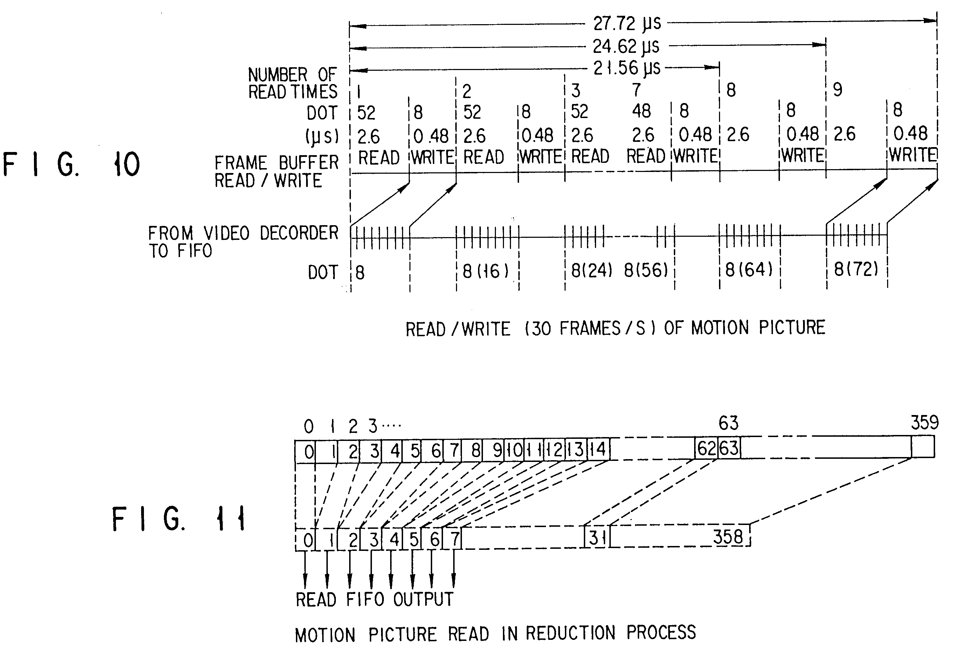

In a motion picture data write operation, motion picture data from the video decoder is stored in a write FIFO (8 dots: 8 × 16 dots) (to be described later), and motion picture data is written in the frame buffer memory 25 when the write FIFO is full while motion picture data is read out from the frame buffer memory 25. A write operation is completed within the period of time in which a minimum of two pictures (VGA) from the video decoder are continuously displayed. Fig. 10 shows a read/write (30 frames/s) timing of motion picture data.

In a motion picture data read operation, data are stored in a read FIFO (360 dots: 360 × 16 bits) (to be described later) in units of lines. The range of motion picture data to be displayed is defined by horizontal/vertical display start registers and horizontal/vertical end registers, and the data is displayed within a determined mixing range. Reduction/enlargement of motion picture data is performed in the vertical and horizontal directions independently in units of 1/64 of motion picture data output from the video decoder or the system bus. Reduction/enlargement scales in the horizontal and vertical directions are set in horizontal and vertical scale registers. If a display range is smaller than a motion picture data range in a motion picture data memory, reduction is performed, and vice versa.

In reducing a display range, a certain number of display dots of data read and stored in the read FIFO are thinned out in the horizontal direction, and a certain number of display lines thereof are thinned out in the vertical directions. Fig. 11 is a diagram for explaining a motion picture data read operation in reduction processing.

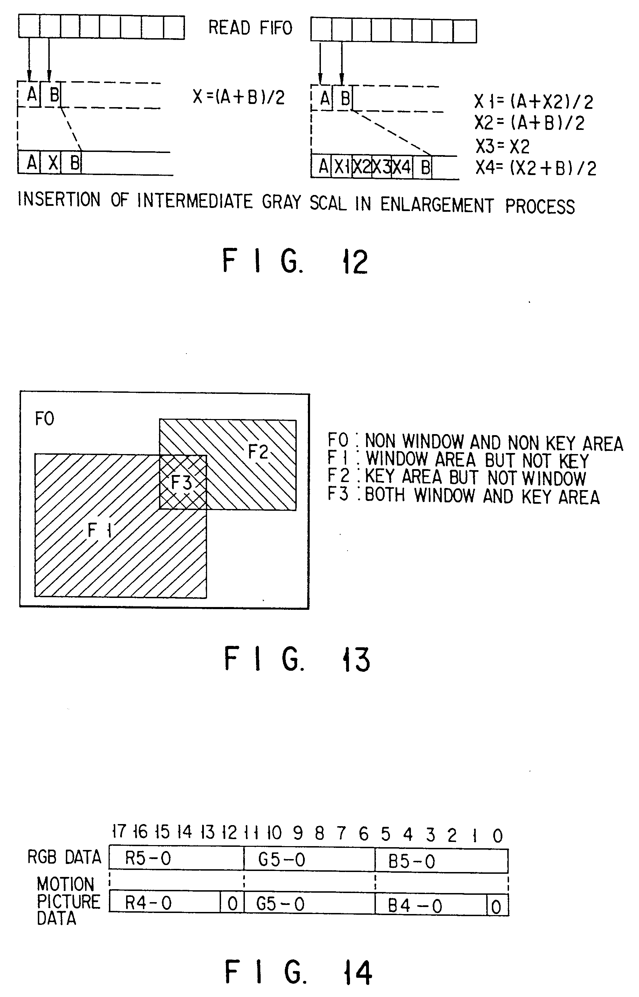

In enlarging a display range, a certain number of display dots are inserted in the horizontal direction, and a certain number of display lines are inserted in the vertical direction. There are two methods of inserting data: a method of simply re-scanning data located immediately before an insertion position; and a method of inserting data upon calculating an intermediate gray scale between data located before and after an insertion position. Fig. 12 is a diagram for explaining the insertion of an intermediate gray scale in enlargement processing. Data may be displayed in the form of stripes depending on the difference between data before and after an insertion position. By inserting an intermediate gray scale, a smoother change in gray scale can be realized. When bit 1 of a motion picture mode register is set, an intermediate gray scale insertion mode is set.

Mixing of motion picture data is performed in a range determined by a combination of a window and a color key area. A specific range in which data are mixed and displayed is selected by bit 5-2 of the motion picture mode register. A window is defined by horizontal/vertical area start registers and horizontal/vertical end registers. A color key area indicates a case wherein a set value in a color comparing register is compared with color data (color lookup table selection), and all the bits coincide with each other. Fig. 13 is a diagram showing a mixing position. If the range determined in the above-described manner does not coincide with a display range determined by horizontal display start/end registers and vertical display/end registers, mixing in the range is ignored. The start position of motion picture data is determined by a start address register value.

Panning of motion picture data can be performed in the horizontal and vertical directions. Column and row addresses required for panning are respectively set in horizontal and vertical panning registers.

18-bit RGB data output from the color lookup table of the video DAC is mixed with 16-bit motion picture data read out from the fame buffer upon matching the RGB data of the motion picture data with the MSB of the RGB data. "0"s are inserted in the LSBs of the R and B data of the motion picture data. Fig. 14 is diagram for explaining a mixing operation of RGB data and motion picture data.

A list of motion picture control registers will be described below.

1. Motion picture mode register

D7: motion picture data input 0: decoder 1: CPU

D6: motion picture display to be rendered still 0: not still 1: still

D5 - D2: mixing range 0: VGA 1: motion picture data

A specific range in which a VGA picture and motion picture data are displayed is selected.

OVL3: both window and color key areas (F3)

OVL2: color key area but not window area (F2)

OVL1: window area but not color key area (F1)

OVL0: non window area and non color key area (F0)

D1: insertion of intermediate gray scale 0: disabled 1: enabled

D0: display enable 0: disabled 1: enabled

2. Start X direction register

D7 - D0: motion picture start X direction

A range of 0 - 359 is set by the number of dot clocks (DCLK) counted from the trailing edge of a motion picture data horizontal sync signal (LPM), which signal indicates a position in the X direction at which motion picture data output from the video decoder is started. The same value as that of a start X direction offset set in the video decoder is set.

3. Start Y direction register

D7 - D0: motion picture start Y direction

A range of 0 - 239 is set by the number of horizontal sync signals (LPH) counted from the trailing edge of a motion picture data vertical sync signal (FPM), which signal indicates a position in the Y direction at which motion picture data output from the video decoder is started. The same value as that of a start Y direction offset set in the video decoder is set.

4. Size X register

D7 - D0: motion picture display width X direction

A range of 0 - 719 is set by the number of dot clocks (DCLK) counted from the trailing edge of a motion picture data horizontal sync signal (LPM). A display size defined by the size X and size Y registers must not exceed an image size decoded by the video decoder.

5. Size Y register

D7 - D0: motion picture display width Y direction

A range of 0 - 479 is set by the number of dot clocks (DCLK) counted from the trailing edge of a motion picture data vertical sync signal (FPM).

6. Horizontal display start register

D7 - D0: horizontal display start

A display start position in the horizontal direction is set. Data is displayed in a range defined by the horizontal display start/end registers and the vertical display start/end registers. A set value must be smaller than the value of the horizontal display end register and set in a range of 0 - 1023 corresponding to a pixel clock count counted from the trailing edge of a horizontal sync signal (LPC).

7. Horizontal display end register

D7 - D0: horizontal display end

A display end position in the horizontal direction is set. A set value must be set in a range of 0 - 1023 corresponding to the number of pixel clocks counted from the trailing edge of a horizontal sync signal (LPC).

8. Vertical display start register

D7 - D0: vertical display start

A display start position in the vertical direction is set. A set value must be smaller than the value of the vertical display end register and set in a range of 0 to 511 corresponding to the number of pixel clocks counted from the trailing edge of a vertical sync signal (FPC).

9. Vertical display end register

D7 - D0: vertical display end

A display end position in the vertical direction is set. A set value must be set in a range of 0 - 511 corresponding to the number of pixel clocks counted from the trailing edge of a vertical sync signal (FPC).

10. Start address register (Height)

D7: bit 8 in the start X direction

D6: bit 9 of size X

D5: bit 8 of size X

D4: bit 8 of size Y

D3: bit 9 of horizontal total dot count

D2: bit 8 of horizontal total dot count

D1: bit 8 of vertical total dot count

D0: display start address

A linear address (16 bits) of a motion picture data frame buffer is set.

11. Start address register (Middle)

D7 - D0: display start address

A linear address of the motion picture data frame buffer is set.

12. Start address register (Low)

D7 - D0: display start address

A linear address of the motion picture data frame buffer is set.

13. Horizontal area start register

D7 - D0: horizontal area start

A window start position in the horizontal direction is set. Data is displayed in a range defined by the horizontal area start/end registers and the vertical start/end registers. A set value must be smaller than the value of the horizontal area end register and set in a range of 0 - 1023 corresponding to the number of pixel clocks counted from the trailing edge of a horizontal sync signal (LPC).

14. Horizontal area end register

D7 - D0: horizontal area end

A window end position in the horizontal direction is set. A set value must be set in a range of 0 - 1023 corresponding to the number of pixel clocks counted from the trailing edge of a horizontal sync signal (LPC).

15. Vertical area start register

D7 - D0: vertical area start

A window start position in the vertical direction is set. A set value must be smaller than the value of the vertical area end register and set in a range of 0 - 511 corresponding to the number of pixel clocks counted from the trailing edge of a vertical sync signal (FPC).

16. Vertical area end register

D7 - D0: vertical area start

A window end position in the vertical direction is set. A set value must be set in a range 0 - 511 corresponding to the number of pixel clocks counted from the trailing edge of a vertical sync signal (FPC).

17. Overflow register 0

D7 - D6: unused

D5: bit 9 of horizontal display start

D4: bit 8 of horizontal display start

D3: bit 9 of horizontal display end

D2: bit 8 of horizontal display end

D1: bit 8 of vertical display start

D0: bit 8 of vertical display end

18. Overflow register 1

D7: unused

D6: bit 8 of horizontal panning

D5: bit 9 of horizontal area start

D4: bit 8 of horizontal area start

D3: bit 9 of horizontal area end

D2: bit 8 of horizontal area end

D1: bit 8 of vertical area start

D0: bit 8 of vertical area end

19. Horizontal scale register

D7 - D6: zoom factor horizontal direction

| HZ1 | HZ0 | Function |
|-----|-----|----------|
| 0 | 0 | no zooming |
| 0 | 1 | x2 |
| 1 | 0 | x4 |
| 1 | 1 | x8 |

If a zoomed display area exceeds the maximum display area (1,024 × 512), setting is invalidated.

D5 - D0: scale in horizontal direction

A reduction/enlargement horizontal direction scale/64 dots is set with respect to motion picture data stored in the frame buffer. A set value falls with in a range of 1 - 63. If 0 is set, or a value within a range of 1 - 31 is set at zoom factors of x2, x4, and x8, reduction/enlargement is not performed. In enlargement processing, a magnification is set by a horizontal scale in combination with HZ1 - 0. HZ1 - 0 HSL5 - 5 (D5 - D0)

```
        Magnification        Unit

        X    X           0                          1
                 —
        0    0           X                          1
                 —
        0    0          1 - 63            1/64 - 63/64
        0    1/64       32 - 63           x1 - x2
             1/32
        1    0          32 - 63           x2 - x4
             1/16
        1    1          32 - 63           x4 - x8
             1/8
```

20. Vertical scale register

D7 - D6: zoom factor in vertical direction

| VZ1 | VZ0 | Function |
|-----|-----|----------|
| 0 | 0 | no zooming |
| 0 | 1 | x2 |
| 1 | 0 | x4 |
| 1 | 1 | x8 |

If a zoomed display area exceeds the maximum display area (1,024 × 512), setting is invalidated.

D5 - D0: scale in vertical direction

A reduction/enlargement vertical direction scale/64 lines is set with respect to motion picture data stored in the motion picture data memory. A set value falls within a range of 1 - 63. If 0 is set, or a value within a range of 1 - 31 is set at zoom factors of x2, x4, and x8, reduction/processing is not performed.

21. Color comparing register

D7 - D0: color comparison

Color data (color lookup table selection) and CMP7 - 0 (D7 - D0) are compared with each other. If all the bits coincide with each other, a color key area is defined.

22. Color mask register

D7 - D0: validity of color data 0: valid 1: invalid

If color data is valid, the value of the color data is compared with a color comparing register value. If color data is invalid, the comparison result is considered to indicate coincidence regardless of the value

11

EP 0 572 024 A2

of the color data.

23. Horizontal panning register

D7 - D0: horizontal panning column address to be set in a range of 0 - 359

24. Vertical panning register

D7 - D0: vertical panning column address to be set in a range of 0 - 239

25. Horizontal total register

D7 - D0: horizontal total dot count

The period of a motion picture data horizontal sync signal (LPM) output to the video decoder is set. When motion picture data are to be continuously read out from the video decoder, a motion picture data display width X direction size (size X register value - start X register value: 0 - 359) is set. If this value is smaller than the motion picture data display width X direction size, the remaining data are neglected, and the data of the next line is read out at the trailing edge of the next motion picture data horizontal sync signal (LPM).

26. Vertical total register

D7 - D0: vertical total dot count

The period of a motion picture data vertical sync signal (FPM) output to the video decoder is set. When motion picture data are to be continuously read out from the video decoder, a motion picture data display width Y direction size (size Y register value - start Y register value: 0 - 239) is set. If this value is smaller than the motion picture data display width Y direction size, the remaining data are neglected, and the next frame data is read out at the tailing edge of the next motion picture data vertical sync signal (FPM).

27. General control register

D7 - D3: unused ( = "0")

D2: motion picture display enable signal 0: input 1: output

D1: vertical synchronization polarity 0: positive 1: negative

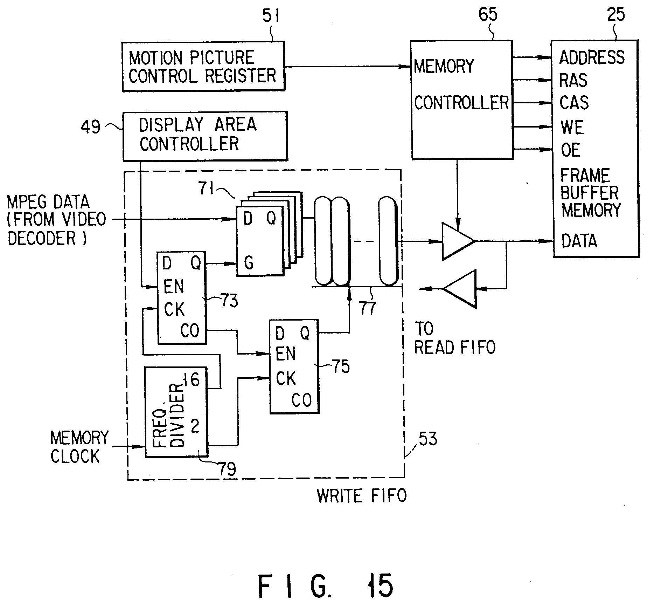

D0: horizontal synchronization polarity 0: positive 1: negative Fig. 15 is a block diagram showing a control circuit for receiving motion picture data from the video decoder and writing the data in the motion picture data frame buffer memory 25.

According to this embodiment, the speed at which data is received from the video decoder and the speed at which the data is written in the motion picture data frame buffer memory 25 are adjusted by the write FIFO 53 for receiving motion picture data from the video decoder and temporarily holding the data in accordance with a parameter register group indicating the size, start position, and the like of motion picture data. With this speed adjustment, motion picture data is written in the motion picture data frame buffer memory in real time. The embodiment further includes the read FIFO 57 for adjusting the speed at which data is read out from the motion picture data frame buffer memory 25 and the speed at which the data is displayed, and enlarging/reducing data read out from the motion picture data frame buffer memory 25. With the read FIFO 57, motion picture data can be displayed in real time even if the data is enlarged/reduced.

Referring to Fig. 15, a register group 71 holds motion picture data from the video decoder and sequentially stores the data in accordance with count values from a base-8 counter 73 (to be described later). The base-8 counter 73 selects registers, of the register group 71, in which motion picture data are to be held. A base-8 counter 75 sequentially selects registers from the register group 71 to output the values, stored therein, by using a multiplexer 77. A frequency divider 79 receives the memory clock and outputs control clocks obtained by 1/2- and 1/16-frequency-dividing the memory clock. The multiplexer 77 selects registers from the register group 71 in accordance with output values from the base-8 counter 75. The motion picture control register 51 holds each motion picture data format. A display area write FIFO controller 49 controls the display area of motion picture data in accordance with a value from the motion picture control register 51. A memory controller 65 controls the addresses and the like of the motion picture data frame buffer memory 25 in accordance with a value from the motion picture control register 51. The frame buffer memory 25 has a frame buffer function of storing motion picture data.

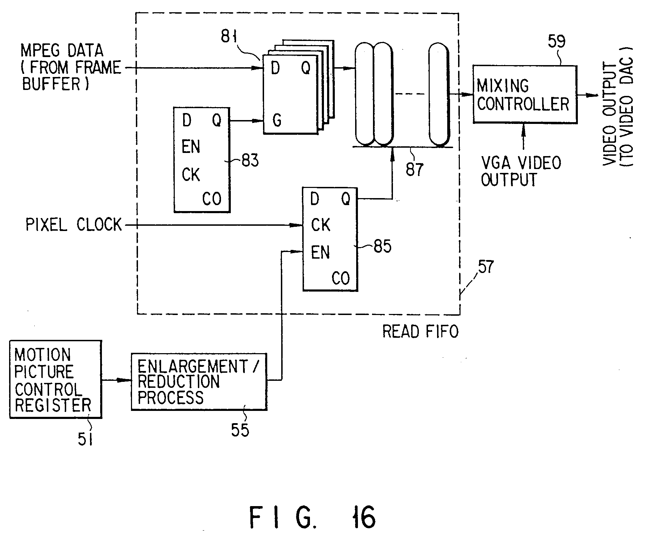

Fig. 16 is a block diagram showing a control circuit for reading out data from the motion picture data frame buffer memory 25 and performing enlargement/reduction processing.

A register group 81 holds data from the motion picture data frame buffer memory 25 and sequentially stores the data in accordance with count values from a counter 83. The counter 83 selects registers, of the register group 81, in which data are to be held. A counter 85 sequentially selects registers from the register group 81 to output the values, stored therein, by using a multiplexer 87. The multiplexer 87 selects registers from the register group 81 in accordance with count values from the counter 85. An enlargement/reduction processor 55 performs enlargement/reduction processing in accordance with a value from the motion picture control register 51. The motion picture control register 51 holds each motion picture data format.

12

The mixing controller 59 mixes an output from the multiplexer 87 with a VGA video output.

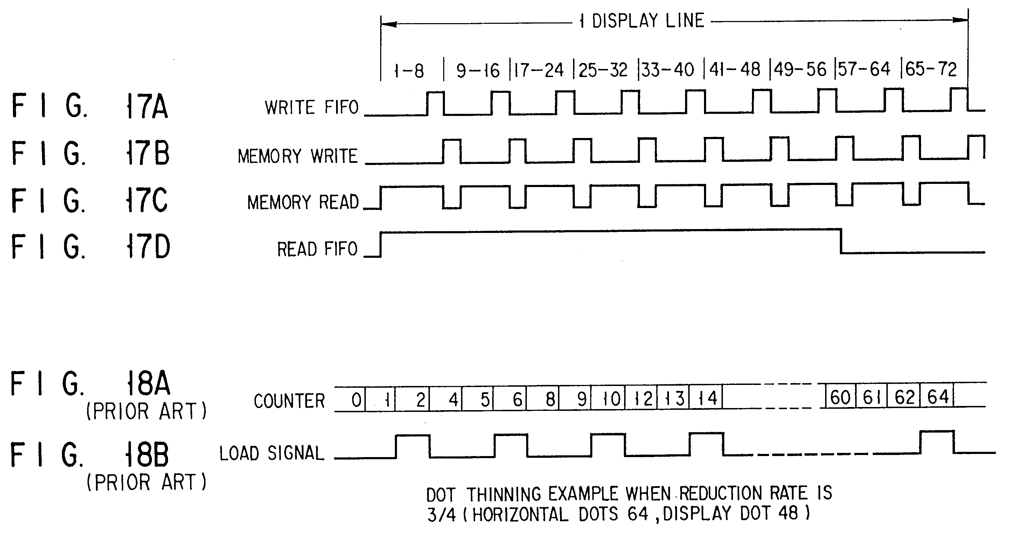

Figs. 17A to 17D are timing charts showing operations of the control circuits in Figs. 15 and 16. Fig. 17A is a timing chart showing an operation of the write FIFO. Fig. 17B is a timing chart showing a memory write operation. Fig. 17C is a timing chart showing a memory read operation. Fig. 17D is a timing chart showing an operation of the read FIFO.

Assume that a motion picture data format used is defined-as 16 bits/pixel, and horizontal resolution × vertical resolution × frequency = 360 dots × 240 dots × 30 Hz.

In this case, the register group 71 is constituted by 16 bits × 8 registers, and can hold 8-pixel motion picture data. When motion picture data is input from the video decoder, the base-8 counter 73 is incremented in units of pixels. A clock output from the counter 73 is obtained by 1/16-frequency-dividing the memory clock. The display area controller 49 determines a display area on the basis of the size of the motion picture data set in the motion picture control register 51 and a value at the start position, and outputs a counter enable signal. Motion picture data are sequentially held in the register group 71 in accordance with these counter values. When the eight registers of the register group 71 become full, the data are sequentially output from the register group 71 by using the multiplexer 77 to write the data in the motion picture data frame buffer memory 25. For this purpose, the base-8 counter 75 is used. A clock to the counter 75 is obtained by 1/2-frequency-dividing the memory clock. The counter 75 operates at a speed eight times higher than that of the counter 73. A write operation with respect to the frame buffer memory 25 is performed by using two memory clocks, and a write timing signal is generated by the memory controller 65. Therefore, the speed at which data are extracted from the register group 71 is equal to the speed at which the data are written in the frame buffer memory 25, so that 8-pixel motion picture data is supplied to the frame buffer memory 25 when the eighth pixel of 8 pixels from the video decoder is held in the register group 71.

By this time, the motion picture data are stored in the frame buffer memory 25 without decreasing the moving speed of the motion picture data.

Subsequently, the data stored in the frame buffer memory 25 are read out during the intervals between write operations of motion picture data with respect to the frame buffer memory 25. Read control is performed by the memory controller 65. A write operation with respect to the frame buffer memory 25 is performed when the memory write signal shown in Fig. 17B is at "H" level. A time other than a write time can be used as a read time. A read time corresponds to a period of time during which the memory read signal shown in Fig. 17C is at "H" level. As shown in Figs. 17A to 17D, while 56-dot motion picture data is written, 360-dot motion picture data is read out. Data read during this period is held in the register group 81. The register group 81 is constituted by 16 bits × 360 registers. That is, the register group 81 corresponds to one line for enlargement/reduction. Data are sequentially held in the register group 81 in accordance with count values from the base-360 counter 83. A counter clock to the base-360 counter 83 is obtained by 1/2-frequency-dividing the memory clock. The register group 81 becomes full upon holding 1-line data, and sequentially outputs data through the multiplexer 87 to display the data. For this purpose, the base-360 counter 85 is used. As a clock to the counter 85, a pixel clock for display is used. In order to perform enlargement/reduction, an enable signal is output from the enlargement/reduction processor 55 to the counter 85. When enlargement processing is to be performed on the basis of horizontal and vertical scale factors set in the motion picture control register 51, the enlargement/reduction processor 55 stops the counter 85 to perform scanning a plurality of number of times. In reduction processing, the enlargement/reduction processor 55 skips the base-360 counter 85 to perform scanning upon thinning motion picture data. Motion picture data output from the multiplexer 87 is mixed with VGA video output by the mixing controller 59. The synthesized video output is input to the video DAC to be converted into analog data. The analog data is then input to an external display unit such as a CRT.

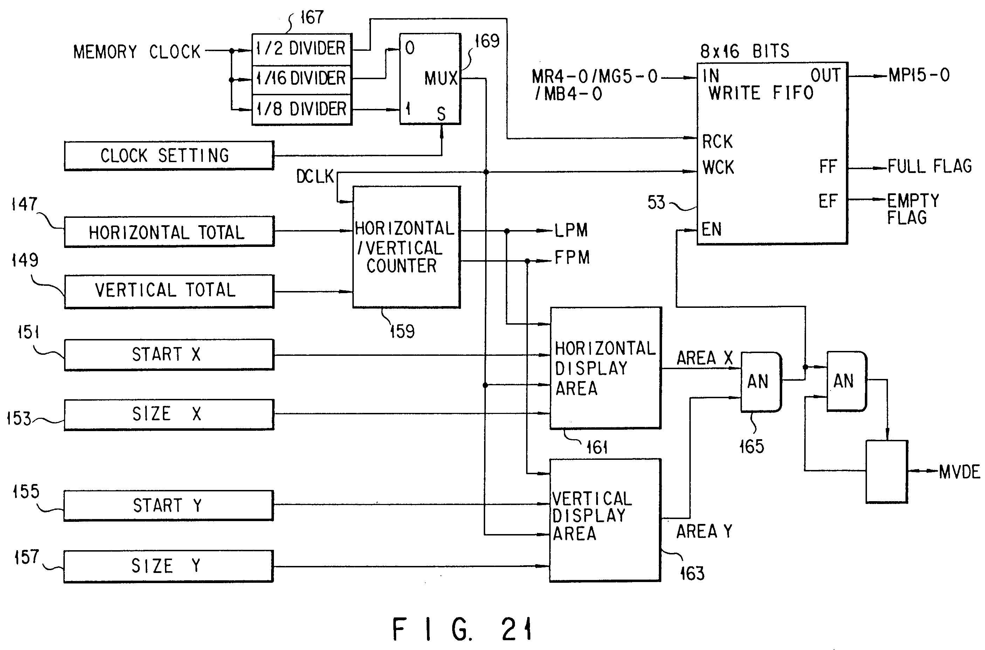

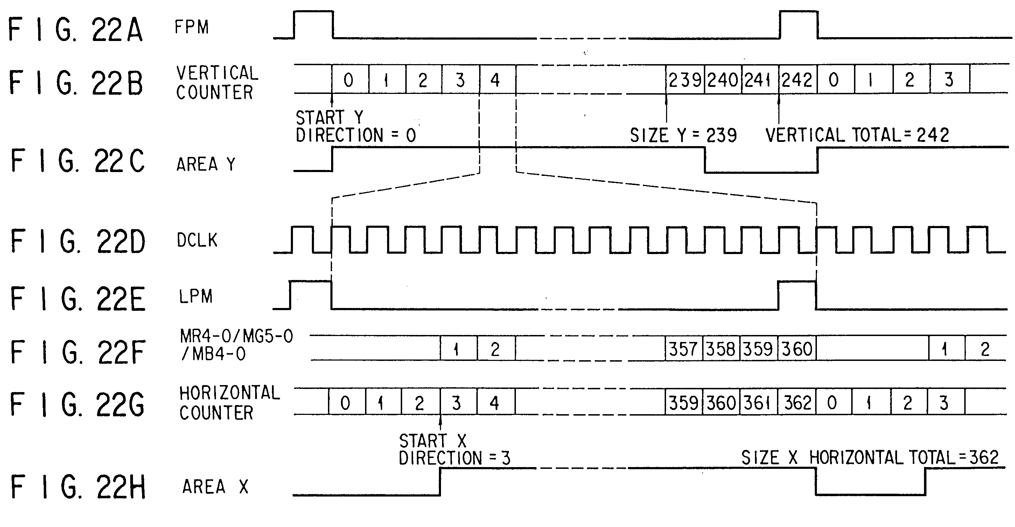

Fig. 21 is a block diagram showing the detailed arrangement of the display area controller 49 shown in Fig. 15. Figs. 22A to 22H are timing charts showing display timings at display areas in the vertical and horizontal directions.

Referring to Fig. 21, a horizontal total register 147, a vertical total register 149, a start X direction register 151, a size X register 153, a start Y direction register 155, and a size Y register 157 are components of the above-described motion picture control register. Horizontal and vertical total values are supplied to a horizontal/vertical counter 159 (see Figs. 22B and 22G) to generate a motion picture data horizontal sync signal LPM (see Fig. 22E) and a motion picture data vertical sync signal FPM (see Fig. 22A). The motion picture data horizontal sync signal LPM and the motion picture data vertical sync signal FPM are respectively supplied to comparators 161 and 163. A start X value and a size X value are also supplied to the comparator 161. The comparator 161 defines a motion picture data display area in the horizontal direction in accordance with these values. The comparator 161 supplies the value of an area X (see Fig. 22H) to the enable terminal EN of the write FIFO 53 through an AND gate 165.

The motion picture data vertical sync signal FPM output from the horizontal/vertical counter 159 is supplied to the comparator 163. A start Y direction value and a size Y value are also supplied to the comparator 163. The comparator 163 defines a motion picture data display area in the vertical direction in accordance with these values. The comparator 163 supplies the value of an area Y (see Fig. 22C) to the enable terminal EN of the write FIFO 53 through the AND gate 165. The memory clock signal is 1/2-frequency-divided by a frequency divider 167. The resultant signal is supplied, as a read clock signal RCK, to the write FIFO 53. Furthermore, the memory clock signal is 1/8- or 1/16-frequency-divided by the frequency divider 167. The resultant signal is then switched by a multiplexer 169 to be supplied, as a dot clock signal DCLK (see Fig. 22D), to the horizontal/vertical counter 159 and the comparators 161 and 163, and is also supplied, as a write clock signal, to the write FIFO 53. The write FIFO 53 stores motion picture data of 16 dots/pixel (MR4-0, MG5-0, MB4-0) (see Fig. 22F) in synchronism with a write clock signal WCK, and outputs motion picture data of 16 dots/pixel (MP15-0) in synchronism with a read clock signal RCK. When the write FIFO 53 becomes full of motion picture data, it outputs a full flag. When the write FIFO 53 becomes empty upon outputting the motion picture data, it outputs an empty flag.

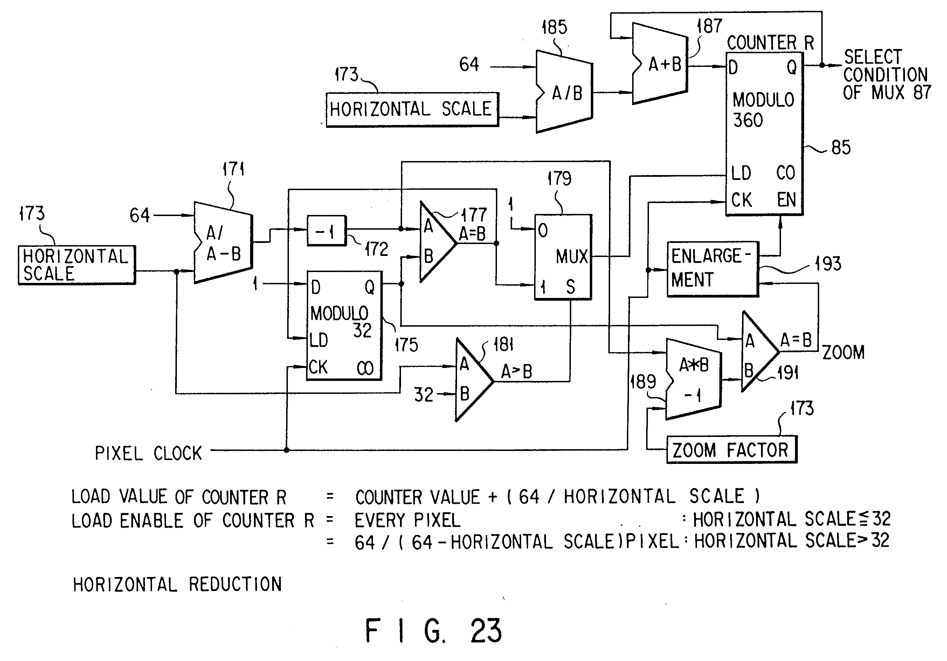

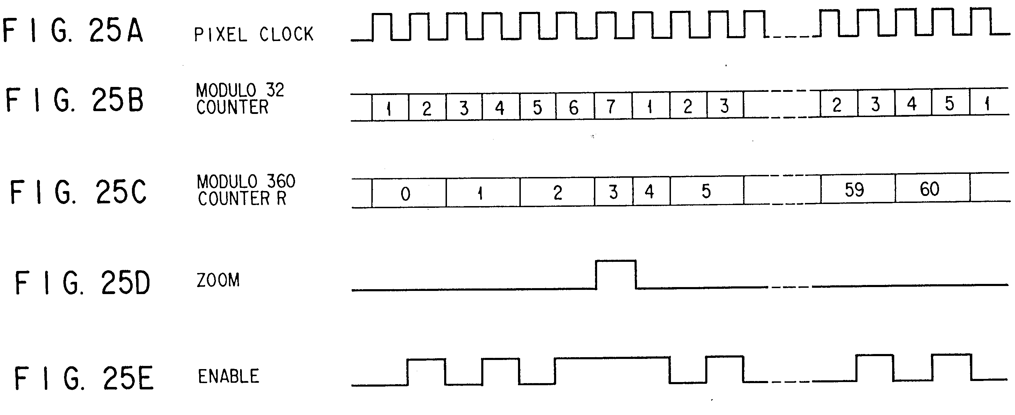

Fig. 23 is a block diagram showing the detailed arrangement of the enlargement/reduction processor 55 in Fig. 16. Referring to Fig. 23, an arithmetic unit 171 performs an arithmetic operation of 64 dots as a basic dot count in reduction processing and a horizontal direction display dot count set in a horizontal scale register 173. Of the 64 dots, a specific number of dots to be displayed are set in the horizontal scale register 173. An initial value "1" is supplied to the D input terminal of a base-32 counter 175, and counting is performed in synchronism with the pixel clock signal shown in Fig. 25A, as shown in Fig. 25B. The base-32 counter 175 generates a load signal which is supplied to the base-360 counter 85 (to be described later). An output from the arithmetic unit 171 is decreased by one by a -1 circuit 172. The resultant value is supplied to the A input terminal of the arithmetic unit 171. The Q output from the base-32 counter is supplied to the B input terminal of arithmetic unit 171. A comparator 177 compares the A and B inputs. When the two inputs coincide with each other, the comparator 177 outputs the corresponding value to a multiplexer 179. A comparator 181 compares a constant "32" with a horizontal scale value supplied to the A input. The comparator 181 checks whether the reduction rate is 1/2 or less. If the reduction rate is 1/2 or less, data to be displayed is smaller in amount than data to be omitted. For this reason, the abovementioned check is performed to obtain data to be displayed. Note that this operation will be described in detail later.

The comparator 181 outputs a selection signal such that the multiplexer 179 selects an output from the comparator 177 if A > B, and selects "1" if A s B. The output from the multiplexer 179 is supplied, as a load signal, to the base-360 counter 85 (the counter 85 shown in Fig. 16). An arithmetic unit 185 divides 64 dots by a horizontal direction display dot count. An arithmetic unit 187 adds an output from the base-360 counter 85 to the calculation result from the arithmetic unit 185. The output from the arithmetic unit 187 is supplied to the D input terminal of the base-360 counter 85. As shown in Fig. 25C, the base-360 counter 85 performs a counting operation, and outputs a selection condition to the multiplexer 87 (Fig. 16). An arithmetic unit 189 performs an arithmetic operation (A*B - 1) of the output (A input) from the -1 circuit 172 and a zoom factor (B input), and supplies the resultant value to a comparator 191. The comparator 191 compares the Q output from the counter 175 with the output from the arithmetic unit 189. If the two outputs coincide with each other, the comparator 191 outputs the zoom signal shown in Fig. 25D to an enlargement controller 193. The enlargement controller 193 performs enlargement control in response to the zoom signal, and supplies the enable signal shown in Fig. 25E to the counter 85.

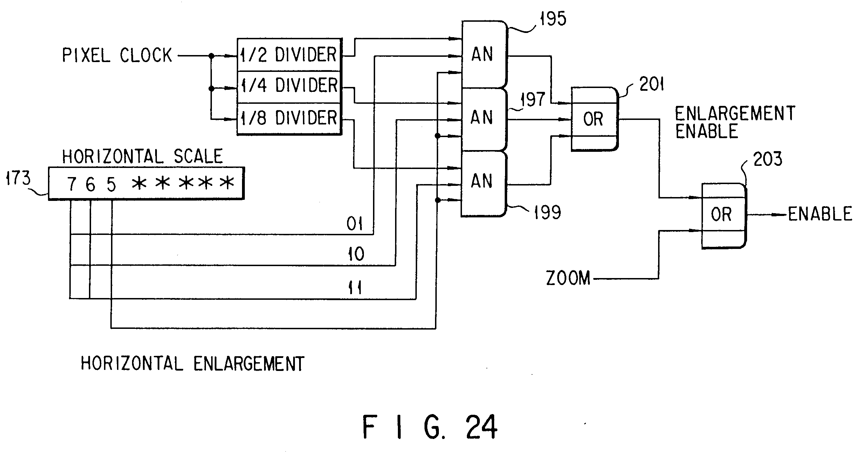

Fig. 24 is a block diagram showing the detailed arrangement of the enlargement controller in Fig. 23. Referring to Fig. 24, clocks obtained by 1/2-, 1/4-, and 1/8-frequency-dividing the pixel clock are respectively supplied to AND gates 195, 197, and 199. In addition, the values of 7 bits of the horizontal scale register are supplied to the AND gates 195, 197, and 199. In this embodiment, when bits 6 and 7 are "01", "10", and "11", x1 - x2, x2 - x4, and x4 - x8 are set, respectively, and the values of 32 - 63 (a unit of 1/64 for x1 - x2, a unit of 1/16 for x2 - x4, and a unit of 1/18 for x4 - x8) are defined by 6 bits from bit 0 to bit 5. The outputs from the AND gates 195, 197, and 199 are ORed by an OR gate 201 to generate an enlargement enable signal. An OR gate 203 calculates the OR between the enlargement enable signal and the zoom signal to generate an ENABLE signal.

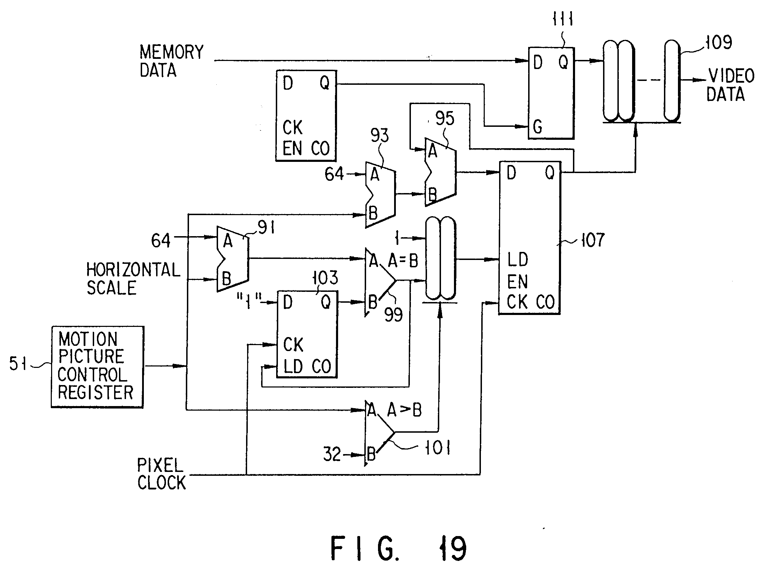

In the prior art, when motion picture data or still picture data is to be reduced in the horizontal and vertical directions and displayed in a given area, dots are thinned out in the horizontal direction in accordance with a horizontal scale value, while lines are thinned out in the vertical direction in accordance with a vertical scale value. According to a standard thinning method, a horizontal dot count is divided by a value obtained by subtracting a display dot count from the horizontal dot count, and the quotient is decreased by, one. Thinning is then performed in units of the resultant value (see Figs. 18A and 18B).

The above-described method is effective when the reduction rate is 1 to 1/2. If, however, the reduction rate is 1/2 or less, since thinning is consecutively performed, another means for controlling such a consecutive thinning operation is required, resulting in an increase in the number of circuit components. In addition, if the consecutive thinning operation is not properly controlled, specific dots are omitted to degrade the display quality.

In this embodiment, the display controller, which is designed to reduce data from the frame buffer memory and display the data at an arbitrary screen position, includes a reduction means for selectively omitting dots depending on a reduction rate, thereby providing a display controller for ensuring high display quality by performing a linear thinning method.

In the embodiment, in order to obtain display data by reducing original display data in the horizontal direction, specific dots must be omitted. An omission ratio is calculated from an output from a parameter register in which a horizontal display dot count (horizontal scale) is stored. Omission is performed when the calculation result coincides with a counter value. An enable signal for omission is output as a load enable signal to a line counter for determining a memory data selection condition. Memory data are held by a plurality of latches. Dots to be displayed (which are not omitted) are selected by a multiplexer corresponding to the number of lines and are supplied to a video output circuit. In the circuit for determining an omission ratio of dots and generating a load enable signal to the line counter, proper omission ratios are designated depending on reduction rates to always display display dots at equal intervals.

Referring to Fig. 19, the motion picture control register 51 sets a horizontal display dot count (horizontal scale value). An arithmetic unit 91 executes $(A \div (A - B)) - 1$. An arithmetic unit 93 executes $A \div B$. An arithmetic unit 95 executes $A + B$. A comparator 99 is enabled when $A = B$ (when $A = B$, the comparator 99 outputs logic "1", otherwise, it outputs logic "0"). A comparator 101 is enabled when $A > B$ (when $A > B$, the comparator 101 outputs logic "1", otherwise, it outputs logic "0"). A counter 107 generates a load signal which is supplied to a multiplexer 109. A multiplexer 105 selects an output from the comparator 99 when an output from the comparator 101 is "0", and selects a constant "1" when an output from the comparator 101 is "1". The constant "1" is set in a counter 103 in response to a load signal LD. The counter 103 performs a counting operation in synchronism with the pixel clock signal. The counter 107 outputs a selection condition to the multiplexer 109. A register 111 holds memory data. The multiplexer 109 selects values of the register 111.

An operation of the above-described arrangement will be described next. Assume that data stored in the frame buffer memory has a size of 360 dots in the horizontal direction, and that the reduction rate is set to be 1/4 and 3/4. In this case, reduction processing in the horizontal direction is performed in units of 64 dots. Therefore, when the reduction rate is set to be 1/4, a scale value indicating a horizontal display dot count is set to be 16 dots. If the reduction rate is 1/2 or less, since data to be displayed is smaller in amount than data to be omitted, data to be displayed is obtained.

Horizontal display dot count (= 16) data is output from the motion picture control register 51, and data representing $64 \div 16 = 4$ is output from the arithmetic unit 93. The comparator 101 compares $A = 16$ with $B = 32$. The multiplexer 105 selects "1" in accordance with the comparison result. Therefore, the counter 107 is always set in a load enabled state, and loads a value obtained by adding an output value from itself to an output value "4" from the arithmetic unit 93 by an adder 95. As a result, the counter 107 outputs "0", "4", "8", "12",..., "60", and the 0th, 4th, 8th, 12th,..., 60th data of the memory data latched by the register 111 are sequentially selected by the multiplexer 109 to be supplied to the video output circuit.

When the reduction rate is set to be 3/4, horizontal dot count (= 48) data is output from the motion picture control register 51. The arithmetic unit 91 calculates $64 \div (64 - 48) - 1 = 3$, and the arithmetic unit 93 calculates $64 \div 48 = 1$. The output value from the counter 103 is compared with the output value (= 3) from the arithmetic unit 91 by the comparator 99. When the two outputs coincide with each other, the comparator 99 outputs an enable signal. The comparator 101 compares $A = 48$ with $A = 32$. The multiplexer 105 selects outputs from the comparator 99. The multiplexer 105 periodically outputs "0", "0", "1", "0", "0", and "1", and loads a value obtained by adding an output value from the counter 107 to "1" from the arithmetic unit 93 by the adder 95 into the counter 107. As a result, the counter 107 outputs "0", "1", "2", "4", "5", "6", "8",..., "62", and 0th, 1st, 2nd, 4th, 5th, 6th, 8th,..., 62nd data of the memory data latched by the register 111 are sequentially selected by the multiplexer 109 to be supplied to the video output circuit.

A scheme for easily mixing and displaying data will be described next. In this scheme, data based on a certain motion picture standard such as MPEG can be easily mixed with display data according to a display control scheme such as a VGA scheme in a VGA display controller to be displayed.

This embodiment includes a color discriminating register for discriminating 256 colors (8 bits) from the respective values of a color lookup table consisting of 6 bits × 256 R, G, and B data by using a certain formula, and storing the resultant values, a conversion table for converting motion picture data of 24 dots/pixel, represented by 8-bit R, G, and B data into data of 18 bits/pixel, represented by 6-bit R, G, and B data, and a comparator for discriminating colors from this 18-bit data by using the above-mentioned formula and comparing them with the values of the color discriminating register. By comparing the discriminated colors with the values of the color discriminating register, values nearest to the values of the register are selected, and the corresponding addresses of the register are output, thus obtaining 8-bit data. As a result, the motion picture data is written or read, as 8-bit data, in or from a motion picture data storing frame buffer. The read data is synthesized with VGA display data to obtain selection addresses (8 bits) of the color lookup table.

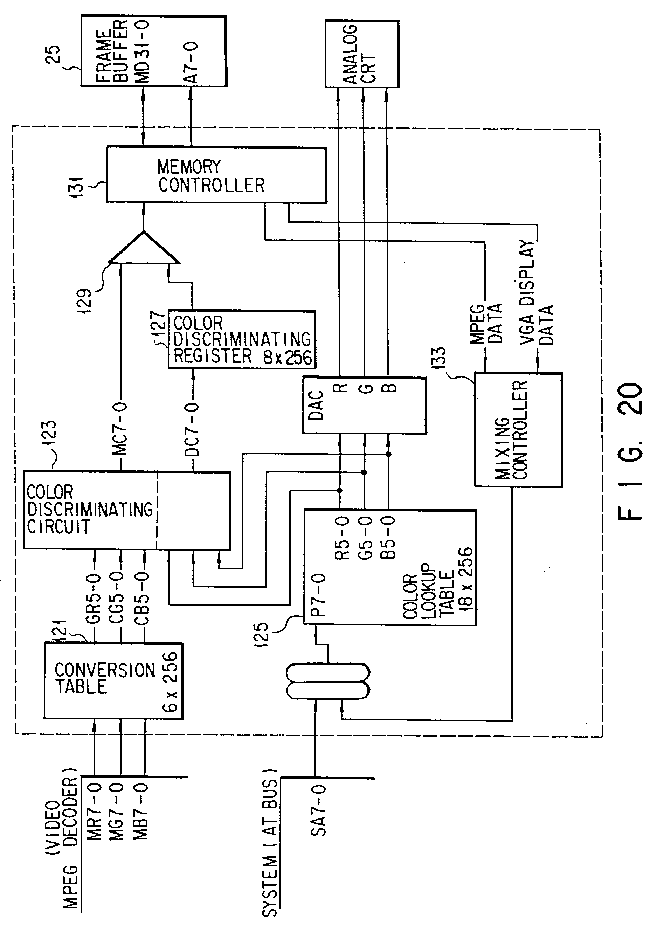

Fig. 20 is a block diagram showing a circuit for performing memory access of motion picture data. Note that a portion enclosed with the broken line in Fig. 20 is constituted by a highly integrated semiconductor element as one chip. Referring to Fig. 20, a conversion table 121 is constituted by 6 bits × 256 registers and is designed to convert 8-bit R, G, and B motion picture data output from an MPEG video decoder into 6-bit R, G, and B data (CR5 - 0, CG5 - 0, and CB5 - 0). The conversion table 121 outputs the converted data to a color discriminating circuit 123. 8-bit R, G, and B image data output from the MPEG decoder are converted into 6-bit R, G, and B image data in order to mix the image data output from the MPEG decoder with R, G, and B display data output from a VGA display controller, which display data are output as 6-bit R, G, and B data. The detail of the conversion table 121 is disclosed in USSN 07/921,749 (filed July 30, 1992) filed by the present inventor. A color lookup table 125 is arranged in the DRAM 21 shown in Fig. 2, and is constituted by 18 bits × 256 registers (for each of R, G, and B). The color lookup table 125 serves to convert 8-bit color data (SA7 - 0) supplied through a system bus into 6-bit R, G, and B values, and outputs the values to the color discriminating circuit 123. The color discriminating circuit 123 converts the 6-bit R, G, and B image data output from the conversion table 121 into 8-bit color discrimination data (MC7 - 0), and also converts the 6-bit R, G, and B display data output from the color lookup table 125 into 8-bit display color discrimination data (DC7 - 0). In the color discriminating circuit 123, 6-bit R, G, and B data, a total of 18 bits, output from the conversion table 121, or 6-bit R, G, and B data, a total of 18 bits, output from the color lookup table 125 are converted into 8-bit data (MC7 - 0) or (DC7 - 0) because 18-bit color data requires a very large memory capacity and considerable time for memory access. A color discriminating register 127 is constituted by 8 bits × 256 registers, and holds 8-bit color discrimination data (DC7 - 0) obtained by converting 6-bit R, G, and B data, output from the color lookup table 125, using the color discriminating circuit 123. A comparator 129 compares the 8-bit color discrimination data (MC7 - 0) obtained by converting the motion picture data in the RGB form using the color discriminating circuit 123 with the 8-bit data (DC7 - 0) obtained by converting the 6-bit R, G, and B data, output from the color lookup table 125, using the color discriminating circuit 123, thus outputting addresses, of the color lookup table, which correspond to values nearest to the color discrimination data. In a VGA specification, since 16 colors of 256 colors can be displayed, all the display data of 256 different colors are not stored in the color lookup table. In practice, 16 equally spaced colors of the 256 colors are stored in the color lookup table, and hence addresses, of the table, which correspond to values nearest the 16 colors are output. A memory controller 131 controls read and write access to the memory. A mixing controller 133 performs mixing control of motion picture data supplied through the memory controller 131 and VGA display data. As a mixing technique, a known technique such as "windowing" or "color keying" can be used. The detail of such a technique is disclosed in, e.g., "PC Video Data Sheet "82C9001A PC Video", Chips and Technologies, Inc. in the US.

256 colors are discriminated from the values of the color lookup table in a video DAC (a combination of a color lookup table and a DAC), which values are set when the display subsystem is started, by using a certain formula, and the resultant values are stored in the color discriminating register (256 registers) 127.

Motion picture data of 24 bits/pixel, represented by 8-bit R, G, and B data output from the MPEG video decoder, are converted into data of 18 bits/pixel, represented by 6-bit R, G, and B data by using the conversion table constituted by 6 bits × 256 registers.

This data represented by 6-bit R, G, and B data are discriminated in 256 colors by using the above-mentioned formula, and the discriminated colors are compared with the values of the color discriminating register 127 to output addresses (8 bits), of the color discriminating register 127, corresponding to values nearest the discriminated colors. Therefore, the data represented by 6-bit R, G, and B data are converted into 8-bit data. This 8-bit is stored in the motion picture data storing frame buffer 25. Similarly, in a read operation, motion picture data is read out as 8-bit data and is synthesized with VGA display data (8 bits) to obtain selection addresses of the color lookup table.

In displaying motion picture data, therefore, colors nearest colors discriminated by the above-mentioned formula are selected from the color lookup table.

In the scheme of directly accessing motion picture data, each pixel is represented by a plurality of bits, and the scheme requires a very large storing frame buffer and a complicated memory access method. However, in this embodiment, data are converted in accordance with VGA display color count and a VGA memory access method so that the system can constituted by a small-capacity frame buffer to realize a reduction in cost. In addition, owing to the easy memory access method, the system can be easily applied to a standard VGA display controller.

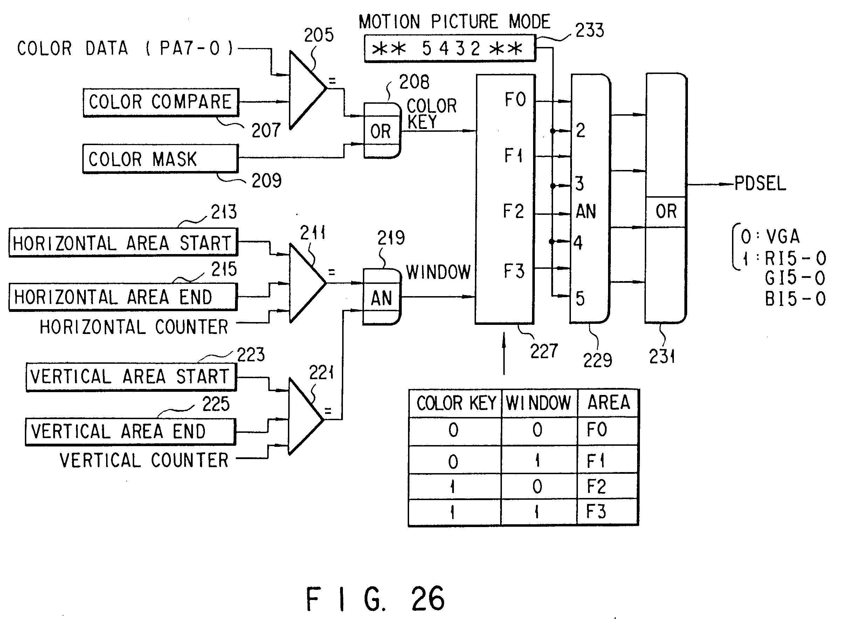

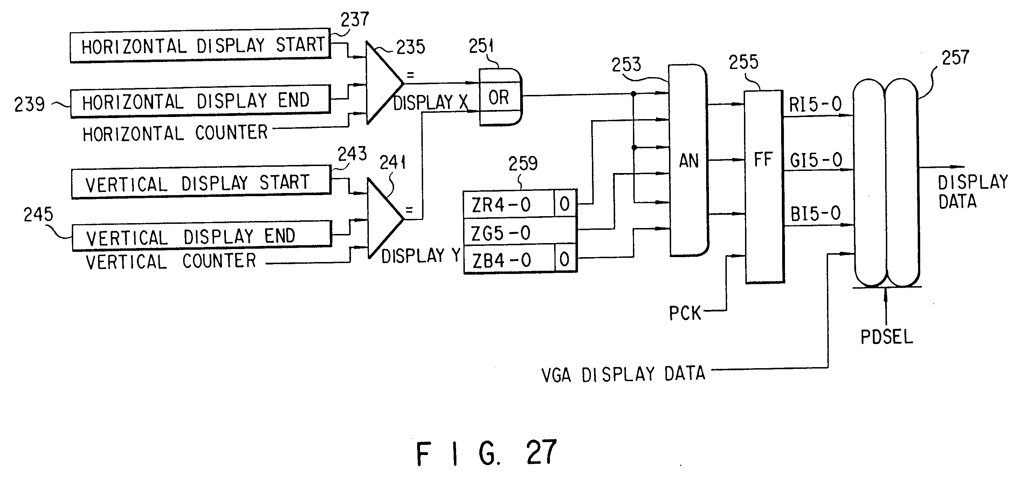

Figs. 26 and 27 are block diagrams showing the detailed arrangement of the mixing controller 133 in Fig. 20. Fig. 26 shows a circuit for generating a pixel data selection condition. Fig. 27 shows a circuit for mixing motion picture data.

Referring to Fig. 26, a comparator 205 compares color data (PA7 - 0) (an address for selecting a color from the color lookup table shown in Fig. 20) with the value of a color comparing register 207 of the motion picture control register. When all the bits coincide with each other, the corresponding area is defined as a color key area. An OR gate 208 calculates the OR between the comparison result from the comparator 205 and the value of a color mask register 209. The color mask register 209 indicates whether the color data is valid or invalid. If the color data is valid, the value of the color data is compared with the color comparing register value. If the color data is invalid, the comparison result is considered to indicate coincidence regardless of the value of the color data. The OR gate 208 outputs a color key signal of logic "0" (incoincidence) or logic "1" (coincidence).

A comparator 211 compares the value of a horizontal area start register 213, the value of a horizontal area end register 215, and a horizontal counter value, and outputs a coincidence or incoincidence signal to an AND gate 219. A comparator 221 compares the value of a vertical area start register 223, the value of a vertical area end register 225, and a vertical counter value, and outputs a coincidence or incoincidence signal to the AND gate 219. The AND gate 219 outputs window signal of logic "0" or logic "1". A gate 227 outputs a signal indicating the F0 area shown in Fig. 13 when both the color key signal and the window signal are at logic "0"; a signal indicating the F1 area, when the color key signal and the window signal are at logic "0" and logic "1", respectively; a signal indicating the F2 area, when the color key signal and the window signals are at logic "1" and logic "0", respectively; and a signal indicating the F3 area, when both the color key signal and the window signals are logic "1". Data from an AND gate 229 and data from a motion picture mode register 233 are ANDed. The motion picture mode register 233 indicates a mixing range, i.e., a range in which a VGA picture and motion picture data are displayed. More specifically, when bit 2 of the motion picture mode register 233 is at logic "1", it indicates "a non color key area and a non window area (F0)". Similarly, when bit 3, bit 4, and bit 5 of the motion picture mode register 233 are logic "1", these bits respectively indicate "a non color area and a window area (F1)", "a color key area and a non window area (F2)", and "a color key area and a window area (F3)". An OR gate 231 calculates the OR between outputs from the AND gate 229, and outputs a signal PDSEL (0: VGA display data, 1: motion picture data) indicating a pixel data selection condition.

Referring to Fig. 27, a comparator 235 compares the value of a horizontal display start register 237, the value of a horizontal display end register 239, and a horizontal counter value, and outputs a display X signal when they coincide with each other. A comparator 241 compares the value of a vertical display start register 243, the value of a vertical display end register 245, and a vertical counter value, and outputs a display Y signal when they coincide with each other. An OR gate 251 calculates the OR between outputs from the comparators 235 and 241, and supplies the resultant data to an AND gate 253. Motion picture data from a motion picture data register 259 is also supplied to the AND gate 253. As a result, a data display range in the horizontal and vertical directions is defined, and motion picture data in this range is supplied to a multiplexer 257. VGA display data is also supplied to the multiplexer 257. Subsequently, the motion picture data or the VGA display data is selectively output from the multiplexer 257 in accordance with a pixel data selection condition generated by the circuit shown in Fig. 25.

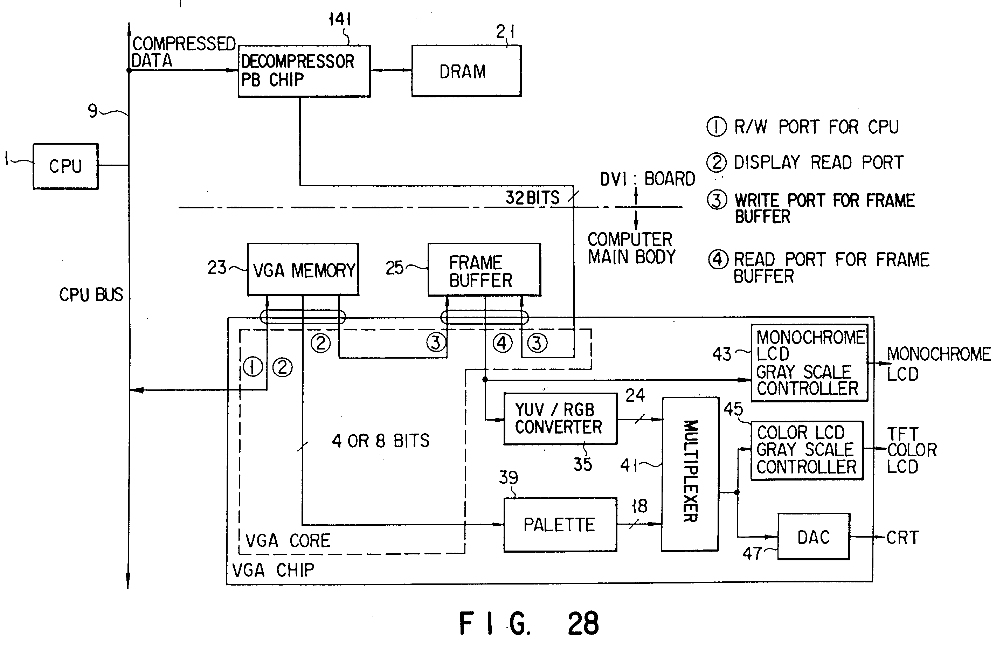

In the arrangement shown in Fig. 2, the YUV/RGB converter is arranged on the MPEG board, and image data are stored in the frame buffer in the RGB form on the computer main body side. However, the YUV/RGB converter may be arranged on the computer main body side, and image data in the YUV form may be stored in the frame buffer. Such an arrangement will be described below with reference to Fig. 28. The same reference numerals in Fig. 28 denote the same parts as in Fig. 2, and a description thereof will be omitted. Referring to Fig. 28, a graphic subsystem incorporated in the computer main body is a display subsystem for displaying graphic software, and is constituted by, e.g., a VGA (Video Graphics Arrays). A graphic subsystem connected to the portable computer main body through an expansion connector is a display subsystem called a multimedia system and designed to display an image. For example, this subsystem is constituted by DVI (a trademark of Intel Corporation in the US) (Digital Video Interactive) board.

A PB chip 141 and a single-port dynamic random access memory (DRAM) 21 are mounted on the DVI board. The PB chip 141 has a function of decompressing compressed image data supplied through a CPU bus 9. As the PB chip 141, for example, the 82750PB PIXEL PROCESSOR available from Intel Corporation in the US can be used. The detail of this PB chip 141 is described in "DVI Technology i750 Video Processor Technical Specifications" published by Intel Corporation. The PB chip 141 writes compressed image (motion/still picture) data, received through the CPU bus 9, in the DRAM (Dynamic Random Access Memory) 21 while decompressing the data. The compressed image data is decompressed and is output, as 32-bit data, to a frame buffer 25 through a connector (not shown) arranged on the portable computer main body and the write port of the frame buffer 25. The detail of the frame buffer 25 is described in USSN 07/906,834.

Note that the PB chip available from Intel Corporation has both compressing and decompressing functions. Since the present invention requires only the decompressing function, a special PB chip may be manufactured.

The DRAM 21 stores microcodes and calculation results of compressed data (which are described in detail in "DVI Technology i750 Video Processor Technical Specifications"). In this embodiment, decompressed YUV video data is written in the frame buffer 25.

The frame buffer 25 is used in the following two ways. When a monochrome LCD (Liquid Crystal Display) is used as a display unit, display data written in the frame buffer 25 at the CRT timing is read out at the monochrome LCD timing, thereby displaying the data on the monochrome LCD at the CRT timing. When a TFT color LCD is used as a display unit, since conversion from the CRT timing to the LCD timing need not be performed by using the frame buffer 25, the frame buffer 25 is used as a memory for storing decompressed image data output from the PB chip.

The output of the frame buffer 25 is connected to a YUV/RGB converter 35. The outputs of the YUV/RGB converter 35 are connected to a multiplexer 41.

A VGA memory 23 is a VRAM for storing display data in the VGA graphic subsystem. Display data is written in the VGA memory 23 by a CPU 1 through the CPU bus 9. The display data stored in the VGA memory 23 is read out through a display read port to be output to a palette 39. The palette 39 performs color conversion of the display data and outputs the resultant data to the multiplexer 41. When a CRT is used as a display unit, the multiplexer 41 outputs display data from the palette 39 to a DAC 47. When a color LCD is used as a display unit, the multiplexer 41 outputs RGB data from the YUV/RGB converter 35 to a color LCD gray scale controller 45.

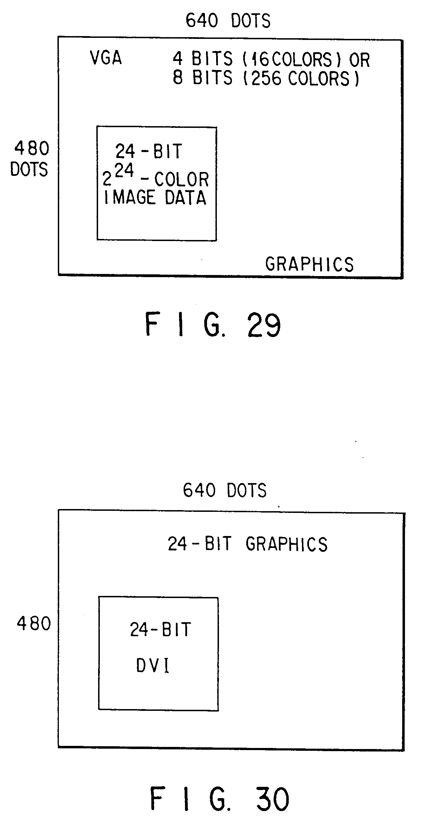

As shown in Figs. 29 and 30, VGA and DVI display data can be displayed together by forming a DVI window on a VGA display screen. There are two methods of displaying VGA and DVI display data together. In the first method, as shown in Fig. 30, both VGA and DVI data are displayed in a 24-bit configuration. In this method, VGA display data and DVI display data are written in the frame buffer 25 and are displayed on the color LCD or the CRT through the YUV/RGB converter 35 and the multiplexer 41. However, graphics data can be satisfactorily displayed in 16 or 256 colors. Therefore, 24 bits per pixel are too many.

In the second method, as shown in Fig. 29, VGA graphics data is displayed using 4 bits (16 colors) or 8 bits (256 colors) per pixel, and only image data is displayed in a 24-bit configuration. With this bit configuration, since graphics data can be accessed in units of only 4 or 8 bits, high-speed processing can be realized. In this method, VGA graphics data is output to the multiplexer 41 through the VGA memory 23 and the palette 39, and image data in the frame buffer 25 is output to the multiplexer 41 through the YUV/RGB converter 35 so that both the data are switched/controlled by the multiplexer 41 to be output to the color LCD or the CRT.

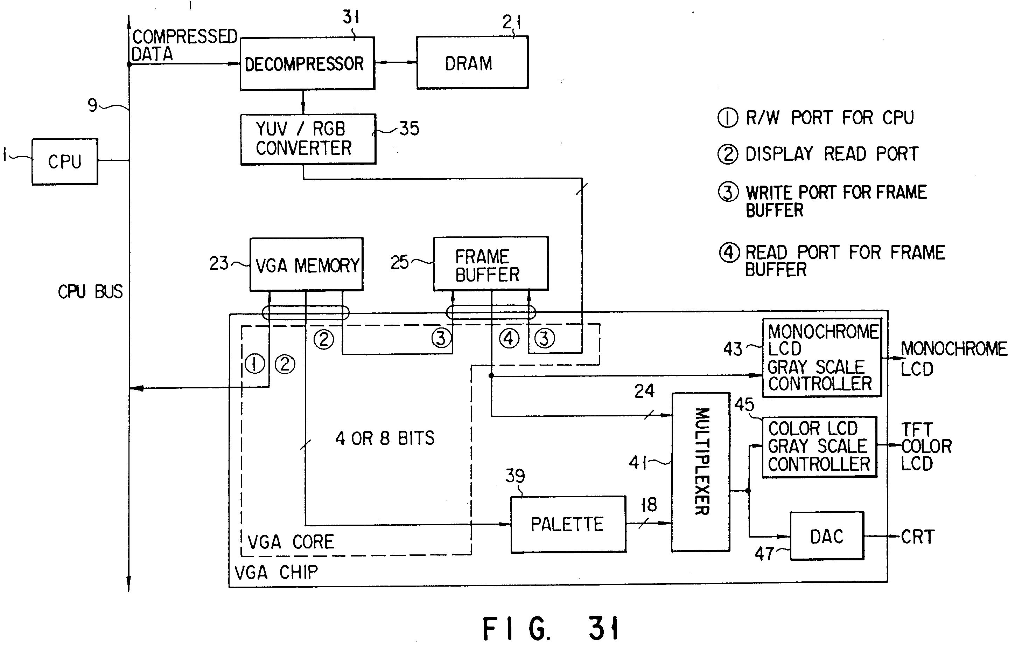

In the embodiment shown in Fig. 2, the decompressor 31, the DRAM 21, and the YUV/RGB converter 35 are arranged on the MPEG board, and the MPEG board is connected to the computer main body through the connector. However, as shown in Fig. 31, the decompressor 31, the DRAM 21, and the YUV/RGB converter 35 may be incorporated, as standard units, in the computer main body.

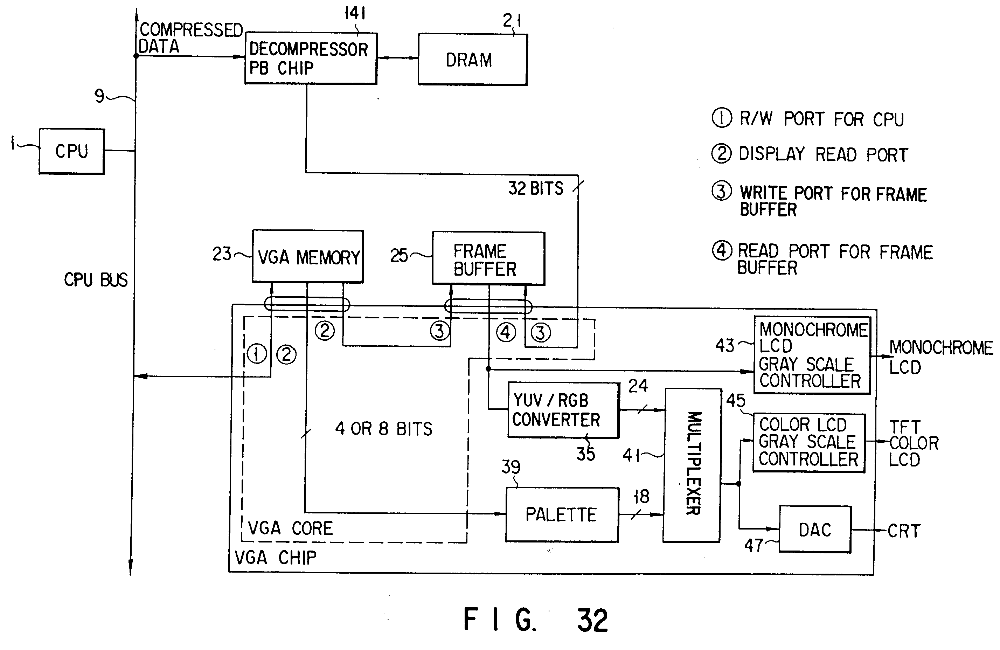

In the embodiment shown in Fig. 28, the PB chip 141 and the DRAM 21 are arranged on the DVI board, and the DVI board is connected to the computer main body through the connector. However, as shown in Fig. 32, the PB chip 141 and the DRAM 21 may be incorporated, as standard units, in the computer main body.

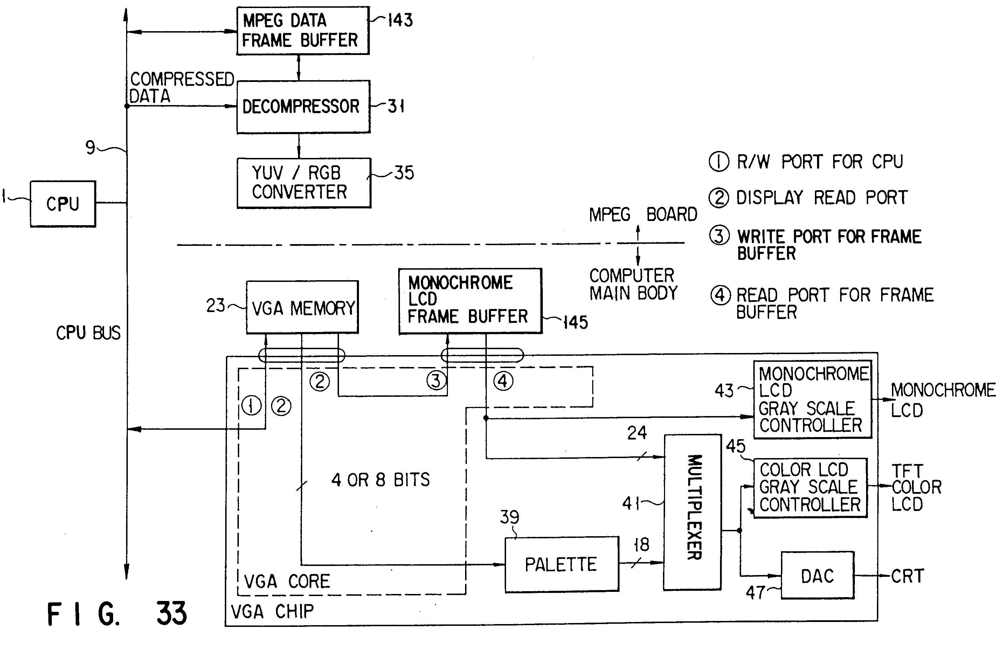

In the embodiment shown in Fig. 2, MPEG motion picture data and monochrome LCD display data are stored in the common frame buffer 25. However, as shown in Fig. 33, an MPEG data frame buffer 143 and a monochrome LCD frame buffer 145 may be commonly controlled by a memory controller in a VGA chip.

18

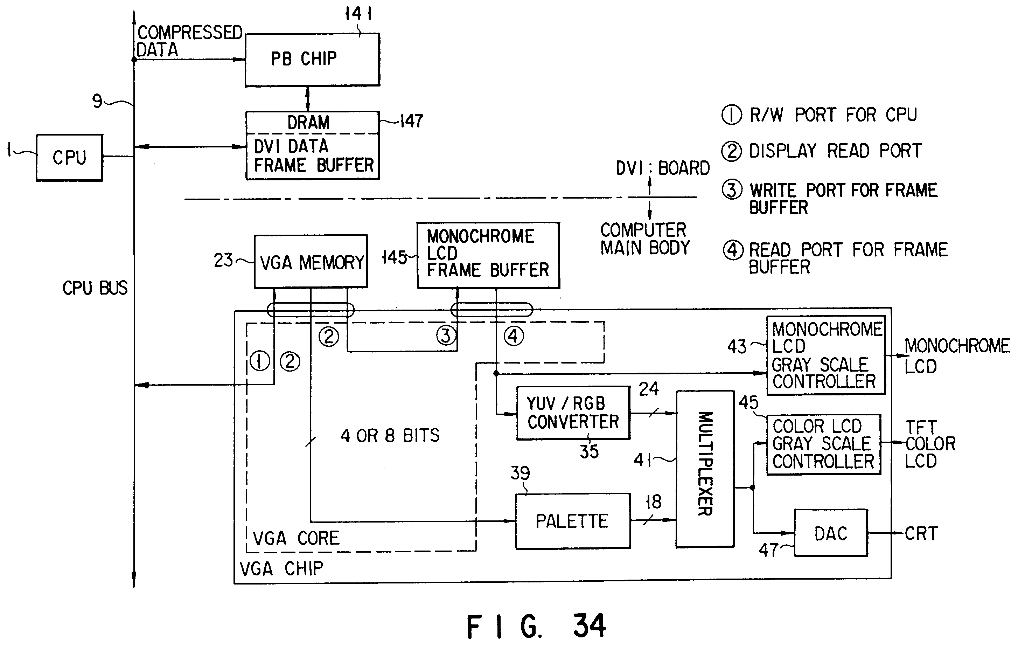

In the embodiment shown in Fig. 28, DVI motion picture data and monochrome LCD display data are stored in the common frame buffer 25. However, as shown in Fig. 34, a DVI data frame buffer 147 may be arranged on a DVI board, and this DVI data frame buffer 147 and a monochrome LCD frame buffer 145 may be commonly controlled by a memory controller in a VGA chip.

In the above-described embodiments, a TFT color LCD is used. However, the system may be designed to use an STN color LCD.

## Claims

1. A display control system in a portable computer having a flat panel display unit, comprising:

   means for receiving image data, externally supplied to said portable computer, in the form of R (red), G (green), and B (blue) data;

   frame buffer memory means (25) used to convert a display timing of a CRT display unit into a display timing of said flat panel display, and also used to store the image data;

   video memory means (23) for storing text data and graphics data;

   palette means (39) for performing color conversion of display data output from said video memory means;

   selecting means (41) for selectively outputting image data output from said frame buffer memory means and display data output from said palette means;

   gray scale control means (43, 45) for controlling a gray scale of display data output from said selecting means and outputting the display data to said flat panel display unit; and

   D/A converter means (47) for converting display data output from said selecting means into R, G, and B analog signals.

2. A system according to claim 1, characterized in that the image data is motion picture data.

3. A system according to claim 2, characterized in that the motion picture data is MPEG (Motion Picture Experts Group) video data.

4. A system according to claim 2, characterized in that the motion picture data is DVI (Digital Video Interactive) video data.

5. A system according to claim 1, characterized in that the image data is still picture data.

6. A system according to claim 5, characterized in that the still picture data is JPEG video data.

7. A system according to claim 1, further comprising a graphic subsystem (VGA core) for controlling read/write operations of display data with respect to said video memory means, and read/write operations of display data and image data with respect to said frame buffer memory means, wherein said graphic subsystem, said palette means, said selecting means, said gray scale control means, and said D/A converter means are constituted by highly integrated semiconductor elements as one chip.

8. A system according to claim 7, characterized in that said graphic subsystem has a VGA (Video Graphics Arrays) standard.

9. A system according to claim 1, further comprising means for displaying image data and graphic data together, the image data consisting of 2n bits (n is a positive integer not less than 8), and the graphic data consisting of a smaller number of bits than the image data.

10. A display control system in a portable computer having a flat panel display unit and a connector for connecting an option board, comprising:

    an MPEG (Motion Picture Experts Group) option board having a decompressor (31) and a YUV/RGB converter (35) mounted thereon, said decompressor decompressing compressed Y, U, and V image data, and said YUV/RGB converter converting the Y, U, and V signals, decompressed by said decompressor, into R, G, and B signals;

    frame buffer memory means (25) used to temporarily store decompressed image data input from said YUV/RGB converter through said connector, and also used to convert a display timing of a CRT display unit into a display timing of said flat panel display unit;

video memory means (23) for storing text data and graphics data;

palette means (39) for performing color conversion of display data output from said video memory means;

selecting means (41) for selectively outputting image data output from said frame buffer memory means and display data output from said palette means;

gray scale control means (43, 45) for controlling a gray scale of display data output from said selecting means and outputting the display data to said flat panel display unit; and

D/A converter means (47) for converting display data output from said selecting means into R, G, and B analog signals.

11. A system according to claim 10, further comprising a graphic subsystem (VGA core) for controlling read/write operations of display data with respect to said video memory means, and read/write operations of display data and image data with respect to said frame buffer memory means, wherein said graphic subsystem, said palette means, said selecting means, said gray scale control means, and said D/A converter means are constituted by highly integrated semiconductor elements as one chip.

12. A system according to claim 11, characterized in that said graphic subsystem has a VGA (Video Graphics Arrays) standard.

13. A system according to claim 10, further comprising means for displaying image data and graphic data together, the image data consisting of 2n bits (n is a positive integer not less than 8), and the graphic data consisting of a smaller number of bits than the image data.

14. A display control system in a portable computer having a flat panel display unit and a connector for connecting an option board, comprising:

a DVI (Digital Video Interactive) option board having a decompressor (141) and a memory (21) mounted thereon, said decompressor decompressing compressed Y, U, and V image data, and said memory storing compressed image data to be decompressed by said decompressor;

frame buffer memory means (25) used to temporarily store decompressed YUV image data input from said YUV/RGB converter through said connector, and also used to convert a display timing of a CRT display unit into a display timing of said flat panel display unit;

YUV/RGB converting means (35) for converting YUV image data output from said frame buffer memory means into RGB image data;

video memory means (23) for storing text data and graphics data;

palette means (39) for performing color conversion of display data output from said video memory means;

selecting means (41) for selectively outputting image data output from said frame buffer memory means and display data output from said palette means;

gray scale control means (43, 45) for controlling a gray scale of display data output from said selecting means and outputting the display data to said flat panel display unit; and

D/A converter means (47) for converting display data output from said selecting means into R, G, and B analog signals.

15. A system according to claim 14, further comprising a graphic subsystem (VGA core) for controlling read/write operations of display data with respect to said video memory means, and read/write operations of display data and image data with respect to said frame buffer memory means, wherein said graphic subsystem, said YUV/RGB converting means, said palette means, said selecting means, said gray scale control means, and said D/A converter means are constituted by highly integrated semiconductor elements as one chip.

16. A system according to claim 14, characterized in that said graphic subsystem has a VGA (Video Graphics Arrays) standard.

17. A system according to claim 14, further comprising means for displaying image data and graphic data together, the image data consisting of 2n bits (n is a positive integer not less than 8), and the graphic data consisting of a smaller number of bits than the image data.

18. A system according to claim 14, characterized in that said memory means for storing the compressed image data is constituted by a dynamic random access memory.

19. A display control system in a portable computer having a flat panel display unit, comprising:

Decompressing means (31) for decompressing compressed Y, U, and V image data;

memory means (21) for storing compressed image data to be decompressed by said decompressing means;

frame buffer memory means (25) used to temporarily store YUV image data decompressed by said decompressing means, and also used to convert a display timing of a CRT display unit into a display timing of said flat panel display unit;

YUV/RGB converting means for converting YUV image data output from said frame buffer memory means into RGB image data;

video memory means for storing text data and graphics data;

palette means for performing color conversion of display data output from said video memory means;

selecting means for selectively outputting image data output from said frame buffer memory means and display data output from said palette means;

gray scale control means for controlling a gray scale of display data output from said selecting means and outputting the display data to said flat panel display unit; and

D/A converter means for converting display data output from said selecting means into R, G, and B analog signals.

20. A system according to claim 19, further comprising a graphic subsystem for controlling read/write operations of display data with respect to said video memory means, and read/write operations of display data and image data with respect to said frame buffer memory means, wherein said graphic subsystem, said decompressing means, said memory means, said YUV/RGB converting means, said palette means, said selecting means, said gray scale control means, and said D/A converter means are constituted by highly integrated semiconductor elements as one chip.

21. A system according to claim 20, characterized in that said graphic subsystem has a VGA (Video Graphics Arrays) standard.

22. A system according to claim 19, further comprising means for displaying image data and graphic data together, the image data consisting of 2n bits (n is a positive integer not less than 8), and the graphic data consisting of a smaller number of bits than the image data.

23. A display control system in a portable computer having a flat panel display unit, a connector for connecting an option board, and a system bus, comprising:

an MPEG (Motion Picture Experts Group) option board having a decompressor, a YUV/RGB converter, and a first frame buffer mounted thereon, said decompressor being connected to said system bus and being connected to said portable computer through said connector and adapted to decompress compressed Y, U, and V image data, said YUV/RGB converter converting Y, U, and V signals decompressed by said decompressor into R, G, and B signals, and said first frame buffer temporarily storing RGB image data output from said YUV/RGB converter;

second frame buffer means used to temporarily store image data output from said first frame buffer through said system bus, and also used to convert a display timing of a CRT display unit into a display timing of said flat panel display unit;

video memory means for storing text data and graphics data;

palette means for performing color conversion of display data output from said video memory means;

selecting means for selectively outputting image data output from said second frame buffer means and display data output from said palette means;

gray scale control means for controlling a gray scale of display data output from said selecting means and outputting the display data to said flat panel display unit;

D/A converter means for converting display data output from said selecting means into R, G, and B analog signals; and

a graphic subsystem for controlling read/write operations of image data with respect to said first frame buffer, read/write operations of display data with respect to said video memory means, and read/write operations of display data and image data with respect to said second frame buffer memory means.

24. A system according to claim 23, characterized in that said graphic subsystem has a VGA standard.

25. A system according to claim 23, characterized in that said palette means, said selecting means, said gray scale control means, said D/A converter means, and said graphic subsystem are constituted by highly integrated semiconductor elements as one chip.

26. A system according to claim 23, further comprising means for displaying image data and graphic data together, the image data consisting of 2n bits (n is a positive integer not less than 8), and the graphic data consisting of a smaller number of bits than the image data.

27. A display control system in a portable computer having a flat panel display unit, a connector for connecting an option board, and a system bus, comprising:

a DVI (Digital Video Interactive) option board having a decompressor and a first frame buffer mounted thereon, said decompressor being connected to said system bus and being connected to said portable computer through said connector and adapted to decompress compressed Y, U, and V image data, and said first frame buffer temporarily storing RGB image data output from said decompressor;

second frame buffer means used to temporarily store image data output from said first frame buffer through said system bus, and also used to convert a display timing of a CRT display unit into a display timing of said flat panel display unit;

YUV/RGB converting means for converting YUV image data output from said second frame buffer means into RGB image data;

video memory means for storing text data and graphics data;

palette means for performing color conversion of display data output from said video memory means;

selecting means for selectively outputting image data output from said YUV/RGB converting means and display data output from said palette means;

gray scale control means for controlling a gray scale of display data output from said selecting means and outputting the display data to said flat panel display unit;

D/A converter means for converting display data output from said selecting means into R, G, and B analog signals; and

a graphic subsystem for controlling read/write operations of image data with respect to said first frame buffer, read/write operations of display data with respect to said video memory means, and read/write operations of display data and image data with respect to said second frame buffer memory means.

28. A system according to claim 27, characterized in that said graphic subsystem has a VGA standard.

29. A system according to claim 27, characterized in that said YUV/RGB converting means, said palette means, said selecting means, said gray scale control means, said D/A converter means, and said graphic subsystem are constituted by highly integrated semiconductor elements as one chip.

30. A system according to claim 27, further comprising means for displaying image data and graphic data together, the image data consisting of 2n bits (n is a positive integer not less than 8), and the graphic data consisting of a smaller number of bits than the image data.

31. A one-chip display controller constituted by highly integrated semiconductor elements, comprising:

a read/write port for allowing a CPU (central processing unit) to access a video memory for storing display data;

a read port used to read out display data stored in said video memory into a plate;

a read port used to convert display data stored in said video memory and based on a display timing of a CRT display unit into data based on a display timing of a flat panel display unit, and also used to read the data into a frame buffer for storing image data;

a write port used to write display data, read out from said video memory, in said frame buffer;

a write port used to write image data in said frame buffer;

a read port used to read out image data from said frame buffer;

a graphic subsystem for controlling read/write operations of display data with respect to said video memory, and read/write operations of image data with respect to said frame buffer;

said palette for performing color conversion of display data output from said video memory;

a switching circuit (41) for switching/outputting image data output from said frame buffer and display data output from said palette;

a gray scale controller (43, 45) for controlling a gray scale of display data output from said switching circuit and outputting the display data to said flat panel display unit; and

a D/A converter (47) for converting display data output from said switching circuit into R, G, and B analog signals.

32. A one-chip display controller constituted by highly integrated semiconductor elements, comprising:

a read/write port ((1) in Fig. 2) for allowing a CPU (central processing unit) to access a video memory for storing display data;

a read port ((2) in Fig. 2) used to read out display data stored in said video memory into a palette;

a read port ((2) in Fig. 2) used to convert display data stored in said video memory and based on a display timing of a CRT display unit into data based on a display timing of a flat panel display unit, and also used to read the data into a frame buffer for storing YUV image data;

a write port ((3) in Fig. 2) used to write display data, read out from said video memory, in said frame buffer;

a write port ((3) in Fig. 2) used to write image data in said frame buffer;

a read port ((4) in Fig. 2) used to read out image data from said frame buffer;

a graphic subsystem (VGA core) for controlling read/write operations of display data with respect to said video memory, and read/write operations of image data with respect to said frame buffer;

said palette for performing color conversion of display data output from said video memory;

a YUV/RGB converter (35) for converting YUV image data output from said frame buffer into RGB image data;

a switching circuit (41) for switching/outputting image data output from said YUV/RGB converter and display data output from said palette;

a gray scale controller (43, 45) for controlling a gray scale of display data output from said switching circuit and outputting the display data to said flat panel display unit; and

a D/A converter (47) for converting display data output from said switching circuit into R, G, and B analog signals.

33. A multimedia display control system, comprising:

frame buffer means (25) for storing decompressed image data;

means (53), arranged at an input stage of said frame buffer means, for receiving the decompressed image data in real time and temporarily holding the data;

means (51) for holding control information for displaying the image data; and

means (65) for controlling said means for temporarily holding the decompressed image data on the basis of control information from said means for holding the display control information for the image data, and writing the image data in said frame buffer means in real time.

34. A system according to claim 33, characterized in that said means for temporarily storing the image data is constituted by an FIFO register.

35. A system according to claim 33, characterized in that the image data includes MPEG motion picture data and DVI motion picture data.

36. A system according to claim 33, further comprising:

means for temporarily storing data read out from said frame buffer means;

means for holding control information for the image data to be read out; and

means for reading out image data from said frame buffer means on the basis of control information from said control information holding means, holding the image data in said temporarily holding means, and performing enlargement/reduction processing of the readout image data.

37. A system according to claim 36, characterized in that said means for temporarily holding the readout image data is constituted by an FIFO register.

23

EP 0 572 024 A2

**38.** A system according to claim 36, further comprising: means for mixing image data from said temporarily storing means with display data from a high-resolution graphic subsystem.

**39.** A system according to claim 38, characterized in that the display data from said high-resolution graphic subsystem includes VGA (Video Graphics Arrays) display data.

**40.** A system according to claim 33, characterized in that the control information for the image data includes information for controlling a display area of motion picture data.

**41.** A system according to claim 38, characterized in that said means for receiving and temporarily holding the decompressed image data, said means for holding the control information for displaying the image data, said means for writing the image data in said frame buffer means in real time, said means for temporarily holding the image data read out from said frame buffer means, said means for holding the control information for the image data to be read out, said means for performing enlargement/reduction processing of the read image data, and said means for mixing the image data with the display data from said high-resolution graphic subsystem are integrated into one chip.

**42.** A display controller for reading out still picture data/motion picture data stored in a frame buffer, enlarging/reducing the image data to an arbitrary size, and displaying the image data at an arbitrary position on a screen to be displayed, comprising:

means (51) for holding a value indicating a size of data stored in said frame buffer, horizontal and vertical scale values indicating reduction rates, and a value indicating a window area to be displayed;

means (Fig. 19) for performing reduction processing by omitting specific dots of the still picture data/motion picture data; and

means (Fig. 19) for checking whether the reduction rate is set such that data to be displayed is smaller in amount than data to be omitted, and changing an omission ratio to obtain data to be displayed.

**43.** A motion picture data display control system, comprising:

means (121) for converting decompressed motion picture data, externally supplied and constituted by n-bit R, G, and B data, into motion picture data constituted by m-bit R, G, and B data (n > m);

means (133) for mixing motion picture data with display data from a high-resolution graphic subsystem;

means (125) for converting n-bit display data, supplied from said high-resolution graphic subsystem, or an n-bit output, supplied from said mixing means, into m-bit R, G, and B color data;

means (123) for converting an output, supplied from said means for performing conversion to the m-bit R, G, and B motion picture data, into n-bit color discrimination data, and converting an output, supplied from said means for performing conversion to the m-bit R, G, and B color data, into n-bit color discrimination data;

means (127) for holding the n-bit color discrimination data obtained by converting the m-bit R, G, and B color data; and

means (129, 131) for comparing the n-bit color discrimination data obtained by converting the m-bit R, G, and B color data with the color discrimination data held by said holding means, and writing color discrimination data having a value nearest to that of the color discrimination data obtained by conversion in a frame buffer.

**44.** A display control system in a portable computer having a flat panel display unit and a connector for connecting an option board, comprising:

decompressing means (31) for decompressing compressed YUV image data;

memory means (21) for storing compressed image data to be decompressed by said decompressing means;

YUV/RGB converting means (35) for converting YUV image data decompressed by said decompressing means into RGB image data;

frame buffer memory means (25) used to temporarily store decompressed RGB image data converted by said YUV/RGB converting means, and also used to convert a display timing of a CRT display unit into a display timing of said flat panel display unit;

video memory means for storing text data and graphics data;

palette means (39) for performing color conversion of display data output from said video memory

24

means;

selecting means (41) for selectively outputting image data output from said frame buffer memory means and display data output from said palette means;

gray scale control means (43, 45) for controlling a gray scale of display data output from said selecting means and outputting the display data to said flat panel display unit; and

D/A converter means (47) for converting display data output from said selecting means into R, G, and B analog signals.

45. A system according to claim 44, further comprising a graphic subsystem for controlling read/write operations of display data with respect to said video memory means, and read/write operations of display data and image data with respect to said frame buffer memory means, wherein said graphic subsystem, said decompressing means, said memory means, said YUV/RGB converting means, said palette means, said selecting means, said gray scale control means, and said D/A converter means are constituted by highly integrated semiconductor elements as one chip.

46. A system according to claim 45, characterized in that said graphic subsystem has a VGA (Video Graphics Arrays) standard.

47. A system according to claim 45, further comprising means for displaying image data and graphic data together, the image data consisting of 2n bits (n is a positive integer not less than 8), and the graphic data consisting of a smaller number of bits than the image data.

48. A display control system in a portable computer having a flat panel display unit, comprising:

means for receiving image data externally supplied to said portable computer;

frame buffer memory means (25) used to convert a display timing of a CRT display unit into a display timing of said flat panel display, and also used to store the image data;

video memory means (23) for storing text data and graphics data;

palette means (39) for performing color conversion of display data output from said video memory means;

selecting means (41) for selectively outputting image data output from said frame buffer memory means and display data output from said palette means;

gray scale control means (43, 45) for controlling a gray scale of display data output from said selecting means and outputting the display data to said flat panel display unit; and

D/A converter means (47) for converting display data output from said selecting means into R, G, and B analog signals.

F I G. 1

F I G. 2

640 DOTS

VGA    4 BITS (16 COLORS ) OR
       8 BITS (256 COLORS)

480
DOTS

24 – BIT,
$2^{24}$ – COLOR
IMAGE DATA

GRAPHICS

F I G.  3

640 DOTS

24–BIT GRAPHICS

480
DOTS

24 BIT
MPEG

F I G.  4

FIG. 5

MOTION PICTURE READ TIMING — VERTICAL DIRECTION

F I G. 6A    FPM

F I G. 6B    DCLK
$\overline{38.5\text{ns}}$
DVS7-0

F I G. 6C    MR4-0, MG5-0, MB4-0

F I G. 6D    MVDE

MOTION PICTURE READ TIMING — HORIZONTAL DIRECTION

F I G. 7A    LPM

F I G. 7B    DCLK
DHS8-0

F I G. 7C    MEMORY CLOCK

F I G. 7D    MR4-0, MG5-0, MB4-0

F I G. 7E    MVDE

EP 0 572 024 A2

F I G. 8

[] UNUSED

F I G. 9

# F I G. 10

NUMBER OF READ TIMES

| | 1 | | 2 | | 3 | 7 | | 8 | | 8 | | 9 | | 8 |

27.72 μs

24.62 μs

21.56 μs

| DOT | 52 | 8 | 52 | 8 | 52 | 48 | 8 | | 8 | | 8 | | 8 |
| (μs) | 2.6 | 0.48 | 2.6 | 0.48 | 2.6 | 2.6 | 0.48 | 2.6 | 0.48 | 2.6 | 0.48 | | 0.48 |

FRAME BUFFER READ / WRITE

READ WRITE READ WRITE READ READ WRITE WRITE WRITE

FROM VIDEO DECORDER TO FIFO

DOT 8    8(16)    8(24) 8(56)    8(64)    8(72)

READ / WRITE (30 FRAMES / S ) OF MOTION PICTURE

# F I G. 11

0 1 2 3 ....                                          63                        359

| 0 | 1 | 2 | 3 | 4 | 5 | 6 | 7 | 8 | 9 | 10 | 11 | 12 | 13 | 14 | | 62 | 63 | |

| 0 | 1 | 2 | 3 | 4 | 5 | 6 | 7 | | 31 | | 358 |

READ FIFO OUTPUT

MOTION PICTURE READ IN REDUCTION PROCESS

EP 0 572 024 A2

READ FIFO

$X = (A+B)/2$

$X1 = (A+X2)/2$
$X2 = (A+B)/2$
$X3 = X2$
$X4 = (X2+B)/2$

INSERTION OF INTERMEDIATE GRAY SCAL IN ENLARGEMENT PROCESS

F I G. 12

FO

F2

F3

F 1

FO : NON WINDOW AND NON KEY AREA
F1 : WINDOW AREA BUT NOT KEY
F2 : KEY AREA BUT NOT WINDOW
F3 : BOTH WINDOW AND KEY AREA

F I G. 13

| | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|
| RGB DATA | R5 - 0 | | | | | | G5 - 0 | | | | | | B5 - 0 | | | | | |
| MOTION PICTURE DATA | R4 - 0 | | | | | | 0 | G5 - 0 | | | | | | B4 - 0 | | | | | 0 |

F I G. 14

F I G. 15

F I G.  16

F I G. 17A    WRITE FIFO

F I G. 17B    MEMORY WRITE

F I G. 17C    MEMORY READ

F I G. 17D    READ FIFO

1 DISPLAY LINE

| 1-8 | 9-16 | 17-24 | 25-32 | 33-40 | 41-48 | 49-56 | 57-64 | 65-72 |

F I G. 18A
(PRIOR ART)    COUNTER

| 0 | 1 | 2 | 4 | 5 | 6 | 8 | 9 | 10 | 12 | 13 | 14 | ... | 60 | 61 | 62 | 64 |

F I G. 18B
(PRIOR ART)    LOAD SIGNAL

DOT THINNING EXAMPLE WHEN REDUCTION RATE IS
3/4 ( HORIZONTAL DOTS 64 , DISPLAY DOT 48 )

F I G. 19

F I G. 20

F I G. 21

FIG. 22A FPM

FIG. 22B VERTICAL COUNTER

FIG. 22C AREA Y

FIG. 22D DCLK

FIG. 22E LPM

FIG. 22F MR4-0/MG5-0 /MB4-0

FIG. 22G HORIZONTAL COUNTER

FIG. 22H AREA X

EP 0 572 024 A2

LOAD VALUE OF COUNTER R   =   COUNTER VALUE + ( 64 / HORIZONTAL SCALE )
LOAD ENABLE OF COUNTER R =   EVERY PIXEL                                    : HORIZONTAL SCALE $\leqq$ 32
                          =   64 / ( 64 - HORIZONTAL SCALE ) PIXEL : HORIZONTAL SCALE > 32

HORIZONTAL REDUCTION

F I G. 23

EP 0 572 024 A2

F I G. 24

EP 0 572 024 A2

F I G. 25A    PIXEL CLOCK

F I G. 25B    MODULO 32 COUNTER

| 1 | 2 | 3 | 4 | 5 | 6 | 7 | 1 | 2 | 3 | | 2 | 3 | 4 | 5 | 1 |

F I G. 25C    MODULO 360 COUNTER R

| 0 | 1 | 2 | 3 | 4 | 5 | | 59 | 60 |

F I G. 25D    ZOOM

F I G. 25E    ENABLE

EP 0 572 024 A2

EP 0 572 024 A2

COLOR DATA ( PA7-0 ) — 205

MOTION PICTURE MODE — 233

** 5432 **

COLOR COMPARE — 207
COLOR MASK — 209
208 COLOR KEY
OR

HORIZONTAL AREA START — 213
HORIZONTAL AREA END — 215
HORIZONTAL COUNTER
211
219
AN WINDOW

VERTICAL AREA START — 223
VERTICAL AREA END — 225
VERTICAL COUNTER
221

F0
F1
F2
F3
227

2
3
AN
4
5
229

OR
231

PDSEL

{ 0 : VGA
1 : R15-0
G15-0
B15-0 }

| COLOR KEY | WINDOW | AREA |
|---|---|---|
| 0 | 0 | F0 |
| 0 | 1 | F1 |
| 1 | 0 | F2 |
| 1 | 1 | F3 |

# F I G. 26

F I G. 27

F I G. 28

EP 0 572 024 A2

640 DOTS

VGA    4 BITS (16 COLORS) OR
       8 BITS (256 COLORS)

480
DOTS

24 - BIT

$2^{24}$ - COLOR
IMAGE DATA

GRAPHICS

F I G. 29

640 DOTS

24 - BIT GRAPHICS

480

24 - BIT

D V I

F I G. 30

FIG. 31

① R/W PORT FOR CPU

② DISPLAY READ PORT

③ WRITE PORT FOR FRAME BUFFER

④ READ PORT FOR FRAME BUFFER

EP 0 572 024 A2

EP 0 572 024 A2

COMPRESSED DATA

141

DECOMPRESSOR PB CHIP

21

DRAM

9

1 CPU

CPU BUS

① R/W PORT FOR CPU

② DISPLAY READ PORT

③ WRITE PORT FOR FRAME BUFFER

④ READ PORT FOR FRAME BUFFER

32 BITS

23 VGA MEMORY

25 FRAME BUFFER

① ②

②

③

④ ③

43 MONOCHROME LCD GRAY SCALE CONTROLLER — MONOCHROME LCD

24 YUV / RGB CONVERTER

45

4 OR 8 BITS

35

COLOR LCD GRAY SCALE CONTROLLER — TFT COLOR LCD

41

MULTIPLEXER

39 PALETTE

18

47 DAC — CRT

VGA CORE

VGA CHIP

F I G. 32

F I G. 33

EP 0 572 024 A2

F I G. 34